# EUROPEAN PATENT APPLICATION

(11) **EP 4 527 706 A1**
(43) Date of publication of application: **26.03.2025**
(21) Application number: 23819948.3
(22) Date of filing: 02.02.2023
(51) Int. Cl.: B60W 50/023, B60W 50/02, B60W 50/04, B60W 50/14, B60W 60/00

(54) **VEHICLE SIGNAL PROCESSING DEVICE AND VEHICLE COMMUNICATION DEVICE COMPRISING SAME**

(30) Priority: 10.06.2022 KR 20220070862; 27.09.2022 KR 20220122192
(71) Applicant: LG Electronics Inc., Yeongdeungpo-gu Seoul 07336 (KR)
(72) Inventor: LEE, Chulhee, Seoul 06772 (KR); PARK, Namyong, Seoul 06772 (KR); LEE, Dongkyu, Seoul 06772 (KR); PARK, Junsang, Seoul 06772 (KR)
(74) Representative: Vossius & Partner Patentanwälte Rechtsanwälte mbB
(86) International application number: PCT/KR2023/001537
(87) International publication number: WO 2023/239009

(57) **Abstract**

A signal processing device of a vehicle and a vehicle communication device including the same according to an embodiment of the present disclosure includes a processor configured to receive data by wire from a plurality of zonal signal processing devices or a communication device and to process the received data, wherein the processor is configured to execute a hypervisor and execute a plurality of virtual machines on the hypervisor, and transmit the data to at least one virtual machine based on physical switching or virtual switching. Accordingly, the received data may be efficiently processed.

## Description

### BACKGROUND

### 1. Technical Field

The present disclosure relates to a signal processing device of a vehicle and a vehicle communication device including the same, and more particularly to a signal processing device of a vehicle capable of efficiently processing received data, and a vehicle communication device including the signal processing device.

### 2. Description of the Related Art

A vehicle is a machine that allows a user to move in a desired direction. A typical example of the vehicle is an automobile.

Meanwhile, a signal processing device for vehicles is mounted in a vehicle for convenience of users using the vehicle.

The signal processing device in the vehicle receives sensor data from various in-vehicle sensor devices and processes the received sensor data.

For example, the sensor data from the sensor devices are required to be transmitted within a predetermined period of time for processing, such that high-speed data packet processing method is required.

Meanwhile, when considerable resources are used for specific data packet processing method, a problem occurs in that data processing speed is reduced.

### SUMMARY

It is an objective of the present disclosure to provide a signal processing device of a vehicle capable of efficiently processing received data, and a vehicle communication device including the signal processing device.

Meanwhile, it is another objective of the present disclosure to provide a signal processing device of a vehicle capable of rapidly and stably processing received data, and a vehicle communication device including the signal processing device.

In accordance with an aspect of the present disclosure, the above and other objectives can be accomplished by providing a signal processing device of a vehicle and a vehicle communication device including the same, which include a processor configured to receive data by wire from a plurality of zonal signal processing devices or a communication device and to process the received data, wherein the processor is configured to execute a hypervisor and execute a plurality of virtual machines on the hypervisor, and transmit the data to at least one virtual machine based on physical switching or virtual switching.

Meanwhile, based on at least one of safety, frequency, or size of the received data, the processor may be configured to change a transmission scheme for transmitting the data to the at least one virtual machine.

Meanwhile, in the case in which the received data has a size greater than or equal to a first reference value and is required to be transmitted to the plurality of virtual machines, the processor may be configured to transmit the data to the plurality of virtual machines based on the physical switching and a shared memory in the hypervisor.

Meanwhile, in the case in which the received data has a size less than or equal to a second reference value and is required to be transmitted to the plurality of virtual machines, the processor may be configured to transmit the data to the plurality of virtual machines based on the physical switching, and a virtual switch and the shared memory in the hypervisor.

Meanwhile, in the case in which a size of the received data is greater than or equal to the first reference value and the physical switching is performed, the processor may be configured to transmit the data to the at least one virtual machine based on a driver in the hypervisor by using a packet processing method.

Meanwhile, in the case in which a size of the received data is greater than or equal to the first reference value and the virtual switching is performed, the processor may be configured to transmit the data to the at least one virtual machine by using a network stack method.

Meanwhile, in the case in which the received data is repeatedly received and input data has a size less than or equal to a second reference value, the processor may be configured to transmit the data to the at least one virtual machine based on the driver in the hypervisor by using a high-speed data path method.

Meanwhile, the processor may be configured to perform physical switching or virtual switching in the hypervisor.

Meanwhile, the processor may be configured to execute a data processing manager in the hypervisor, wherein based on at least one of safety, frequency, or size of the received data, the data processing manager may be configured to change a transmission scheme for transmitting the data to the at least one virtual machine.

Meanwhile, a first virtual machine among the plurality of virtual machines may correspond to a system service virtual machine, a second virtual machine among the plurality of virtual machines may correspond to a virtual machine with a quality management level, a third virtual machine among the plurality of virtual machines may correspond to a virtual machine with a specific safety level, and a fourth virtual machine among the plurality of virtual machines may correspond to a virtual machine acting as a master node for orchestration.

Meanwhile, the first to third virtual machines may correspond to worker node virtual machines.

Meanwhile, the processor may be configured to execute a fifth virtual machine corresponding to a highest risk classification level, via a separate core different from the first to fourth virtual machines.

Meanwhile, the hypervisor may be configured to execute a data processing manager, and the first to fourth virtual machines may be configured to execute a high-speed packet processing module, wherein in response to executing the data processing manager, data may be transmitted to at least one high-speed packet processing module of the first to fourth virtual machines.

Meanwhile, in response to an additional service or application in a first zonal signal processing device among the plurality of zonal signal processing devices, the processor may be configured to execute the additional virtual machine on the hypervisor, and transmit data, received from the first zonal signal processing device, to the additional virtual machine based on the virtual switching.

Meanwhile, the processor may be configured to increase the number of virtual switches as the number of additional virtual machines increases.

Meanwhile, the received data may include camera data or sensor data.

In accordance with another aspect of the present disclosure, the above and other objectives can be accomplished by providing a signal processing device of a vehicle and a vehicle communication device including the same, which include a processor configured to receive data by wire from a plurality of zonal signal processing devices or a communication device and to process the received data, wherein the processor is configured to execute a hypervisor and execute a plurality of virtual machines on the hypervisor, and change a transmission scheme for transmitting the data to at least one virtual machine based on at least one of safety, frequency, or size of the received data.

Meanwhile, in response to need for transmission of the received data to the plurality of virtual machines, the processor may be configured to transmit the data to the plurality of virtual machines based on the physical switching and a shared memory.

Meanwhile, in the case in which a size of the received data is greater than or equal to a first reference value and the physical switching is performed, the processor may be configured to transmit the data to the at least one virtual machine based on a driver in the hypervisor by using a packet processing method; and in the case in which a size of input data is greater than or equal to the first reference value and virtual switching is performed, the processor may be configured to transmit the data to the at least one virtual machine by using a network stack method.

Meanwhile, in the case in which the received data is repeatedly received, the processor may be configured to transmit the data to the at least one virtual machine based on the driver in the hypervisor by using a high-speed data path method.

### EFFECTS OF THE DISCLOSURE

A signal processing device of a vehicle and a vehicle communication device including the same according to an embodiment of the present disclosure include a processor configured to receive data by wire from a plurality of zonal signal processing devices or a communication device and to process the received data, wherein the processor is configured to execute a hypervisor and execute a plurality of virtual machines on the hypervisor, and transmit the data to at least one virtual machine based on physical switching or virtual switching. Accordingly, the received data may be efficiently processed. Particularly, the received data may be processed efficiently, rapidly, and stably.

Meanwhile, based on at least one of safety, frequency, or size of the received data, the processor may be configured to change a transmission scheme for transmitting the data to the at least one virtual machine. Accordingly, the received data may be efficiently processed.

Meanwhile, in the case in which the received data has a size greater than or equal to a first reference value and is required to be transmitted to the plurality of virtual machines, the processor may be configured to transmit the data to the plurality of virtual machines based on the physical switching and a shared memory in the hypervisor. Accordingly, the received data may be efficiently processed.

Meanwhile, in the case in which the received data has a size less than or equal to a second reference value and is required to be transmitted to the plurality of virtual machines, the processor may be configured to transmit the data to the plurality of virtual machines based on the physical switching, and a virtual switch and the shared memory in the hypervisor. Accordingly, the received data may be efficiently processed.

Meanwhile, in the case in which a size of the received data is greater than or equal to the first reference value and the physical switching is performed, the processor may be configured to transmit the data to the at least one virtual machine based on a driver in the hypervisor by using a packet processing method. Accordingly, the received data may be efficiently processed.

Meanwhile, in the case in which a size of the received data is greater than or equal to the first reference value and the virtual switching is performed, the processor may be configured to transmit the data to the at least one virtual machine by using a network stack method. Accordingly, the received data may be efficiently processed.

Meanwhile, in the case in which the received data is repeatedly received and input data has a size less than or equal to a second reference value, the processor may be configured to transmit the data to the at least one virtual machine based on the driver in the hypervisor by using a high-speed data path method. Accordingly, the received data may be efficiently processed.

Meanwhile, the processor may be configured to perform physical switching or virtual switching in the hypervisor. Accordingly, the received data may be efficiently processed.

Meanwhile, the processor may be configured to execute a data processing manager in the hypervisor, wherein based on at least one of safety, frequency, or size of the received data, the data processing manager may be configured to change a transmission scheme for transmitting the data to the at least one virtual machine. Accordingly, the received data may be efficiently processed.

Meanwhile, a first virtual machine among the plurality of virtual machines may correspond to a system service virtual machine, a second virtual machine among the plurality of virtual machines may correspond to a virtual machine with a quality management level, a third virtual machine among the plurality of virtual machines may correspond to a virtual machine with a specific safety level, and a fourth virtual machine among the plurality of virtual machines may correspond to a virtual machine acting as a master node for orchestration. Accordingly, the virtual machines may be executed based on safety levels.

Meanwhile, the first to third virtual machines may correspond to worker node virtual machines, thereby enabling data transmission based on orchestration.

Meanwhile, the processor may be configured to execute a fifth virtual machine corresponding to a highest risk classification level, via a separate core different from the first to fourth virtual machines. Accordingly, data corresponding to the highest risk classification level may be stably processed.

Meanwhile, the hypervisor may be configured to execute a data processing manager, and the first to fourth virtual machines may be configured to execute a high-speed packet processing module, wherein in response to executing the data processing manager, data may be transmitted to at least one high-speed packet processing module of the first to fourth virtual machines. Accordingly, the received data may be efficiently processed.

Meanwhile, in response to an additional service or application in a first zonal signal processing device among the plurality of zonal signal processing devices, the processor may be configured to execute the additional virtual machine on the hypervisor, and transmit data, received from the first zonal signal processing device, to the additional virtual machine based on the virtual switching. Accordingly, the received data may be efficiently processed.

Meanwhile, the processor may be configured to increase the number of virtual switches as the number of additional virtual machines increases. Accordingly, the received data may be efficiently processed.

Meanwhile, the received data may include camera data or sensor data. Accordingly, the received data may be efficiently processed.

A signal processing device of a vehicle and a vehicle communication device including the same according to another embodiment of the present disclosure include a processor configured to receive data by wire from a plurality of zonal signal processing devices or a communication device and to process the received data, wherein the processor is configured to execute a hypervisor and execute a plurality of virtual machines on the hypervisor, and change a transmission scheme for transmitting the data to at least one virtual machine based on at least one of safety, frequency, or size of the received data. Accordingly, the received data may be efficiently processed. Particularly, the received data may be processed efficiently, rapidly, and stably.

Meanwhile, in response to need for transmission of the received data to the plurality of virtual machines, the processor may be configured to transmit the data to the plurality of virtual machines based on the physical switching and a shared memory. Accordingly, the received data may be efficiently processed.

Meanwhile, in the case in which a size of the received data is greater than or equal to a first reference value and the physical switching is performed, the processor may be configured to transmit the data to the at least one virtual machine based on a driver in the hypervisor by using a packet processing method; and in the case in which a size of input data is greater than or equal to the first reference value and virtual switching is performed, the processor may be configured to transmit the data to the at least one virtual machine by using a network stack method. Accordingly, the received data may be efficiently processed.

Meanwhile, in the case in which the received data is repeatedly received, the processor may be configured to transmit the data to the at least one virtual machine based on the driver in the hypervisor by using a high-speed data path method. Accordingly, the received data may be efficiently processed.

### BRIEF DESCRIPTION OF THE DRAWINGS

FIG. 1 is a view showing an example of the exterior and interior of a vehicle;
FIGS. 2A to 2C are diagrams illustrating various architectures of a vehicle communication gateway according to an embodiment of the present disclosure;
FIG. 3 is an exemplary internal block diagram of a signal processing device of FIG. 2A;
FIG. 4A is a diagram illustrating an example of an arrangement of a vehicle display apparatus in a vehicle according to an embodiment of the present disclosure;
FIG. 4B is a diagram illustrating another example of an arrangement of a vehicle display apparatus in a vehicle according to an embodiment of the present disclosure;
FIG. 5 is an internal block diagram illustrating the vehicle display apparatus of FIG. 4B;
FIG. 6 is an internal block diagram illustrating an example of a vehicle communication device;
FIG. 7 is an internal block diagram illustrating another example of a vehicle communication device;
FIGS. 8A to 8D are diagrams illustrating various examples of a vehicle communication device according to an embodiment of the present disclosure;
FIGS. 9A to 9F are diagrams illustrating various examples of data transmission schemes of a signal processing device of FIGS. 8A to 8D;
FIG. 10 is a diagram illustrating an example of a signal processing device according to an embodiment of the present disclosure; and
FIGS. 11 to 15 are diagrams referred to in the description of FIG. 10.

### DETAILED DESCRIPTION

Hereinafter, the present disclosure will be described in detail with reference to the accompanying drawings.

With respect to constituent elements used in the following description, suffixes "module" and "unit" are given only in consideration of ease in preparation of the specification, and do not have or serve different meanings. Accordingly, the suffixes "module" and "unit" may be used interchangeably.

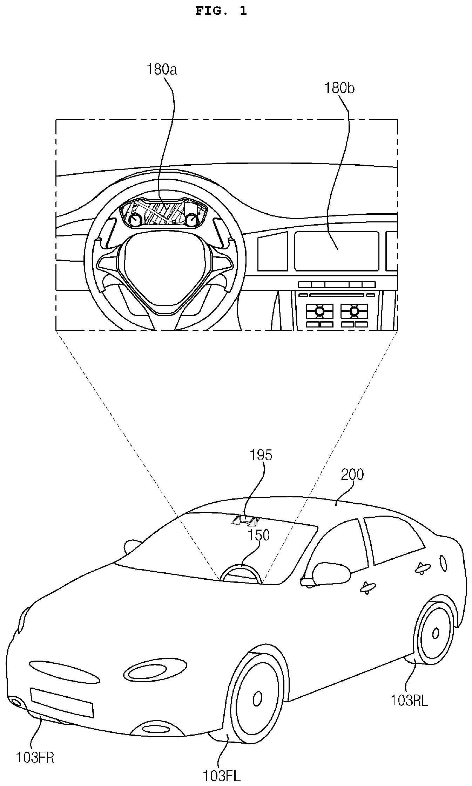

FIG. 1 is a view showing an example of the exterior and interior of a vehicle.

Referring to the figure, the vehicle 200 is moved by a plurality of wheels 103FR, 103FL, 103RL,... rotated by a power source and a steering wheel 150 configured to adjust an advancing direction of the vehicle 200.

Meanwhile, the vehicle 200 may be provided with a camera 195 configured to acquire an image of the front of the vehicle.

Meanwhile, the vehicle 200 may be further provided therein with a plurality of displays 180a and 180b configured to display images and information.

In FIG. 1, a cluster display 180a and an audio video navigation (AVN) display 180b are illustrated as the plurality of displays 180a and 180b. In addition, a head up display (HUD) may also be used.

Meanwhile, the audio video navigation (AVN) display 180b may also be called a center information display.

Meanwhile, the vehicle 200 described in this specification may be a concept including all of a vehicle having an engine as a power source, a hybrid vehicle having an engine and an electric motor as a power source, and an electric vehicle having an electric motor as a power source.

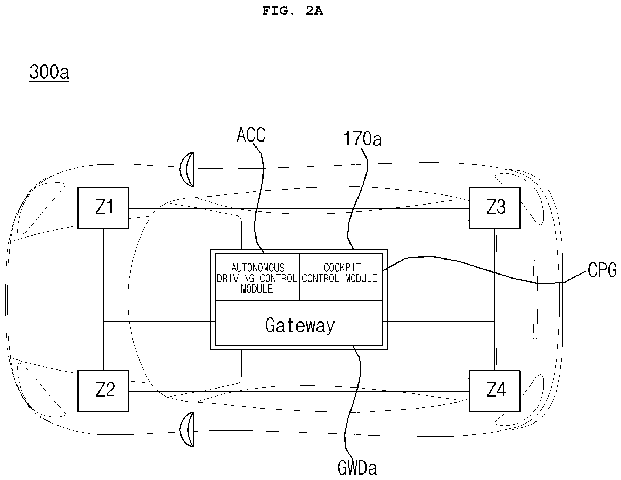

FIGS. 2A to 2C are diagrams illustrating various architectures of a vehicle communication gateway according to an embodiment of the present disclosure.

First, FIG. 2A is a diagram illustrating a first architecture of a vehicle communication gateway according to an embodiment of the present disclosure.

Referring to the drawing, the first architecture 300a may correspond to a zone-based architecture.

Accordingly, in-vehicle sensor devices and processors may be mounted in each of a plurality of zones Z1 to Z4, and a signal processing device 170a including a vehicle communication gateway GWDa may be disposed at the center of the plurality of zones Z1 to Z4.

Meanwhile, the signal processing device 170a may further include a self-driving control module ACC, a cockpit control module CPG, etc., in addition to the vehicle communication gateway GWDa.

The vehicle communication gateway GWDa in the signal processing device 170a may be a High Performance Computing (HPC) gateway.

That is, as an integrated HPC gateway, the signal processing device 170a of FIG. 2A may exchange data with an external communication module (not shown) or processors (not shown) in the plurality of zones Z1 to Z4.

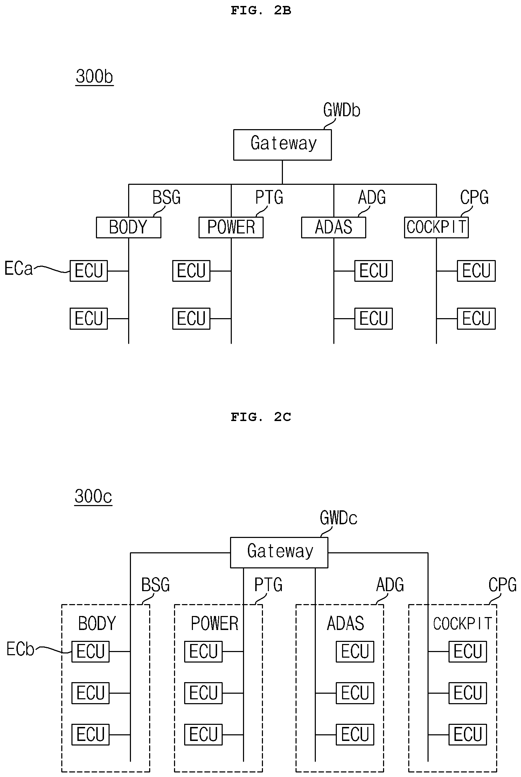

FIG. 2B is a diagram illustrating a second architecture of a vehicle communication gateway according to an embodiment of the present disclosure.

Referring to the drawing, a second architecture 300b may correspond to a domain integrated architecture.

Accordingly, a body chassis control module (BSG), a power control module (PTG), an ADAS control module (ADG), and a cockpit control module (CPG) are connected in parallel to a gateway GWDb, and a plurality of processors ECU may be electrically connected to the respective modules BSG, PTG, ADG, and CPG.

Meanwhile, the respective processors ECU may be connected to the gateway GWDb while being integrated therein.

Meanwhile, the signal processing device 170 including the gateway GWDb of FIG. 2B may function as a domain integrated signal processing device.

FIG. 2C is a diagram illustrating a third architecture of a vehicle communication gateway according to an embodiment of the present disclosure.

Referring to the drawing, a third architecture 300c may correspond to a distributed architecture.

Accordingly, the body chassis control module (BSG), the power control module (PTG), the ADAS control module (ADG), and the cockpit control module (CPG) are connected in parallel to a gateway GWDc, and particularly a plurality of processors ECU in the respective control modules may be electrically connected in parallel to the gateway GWDc.

Upon comparison with FIG. 2B, the third architecture has a difference in that the respective processors ECU are connected directly to the gateway GWDc without being connected to another module.

Meanwhile, the signal processing device 170 including the gateway GWDc of FIG. 2C functions as a distributed signal processing device.

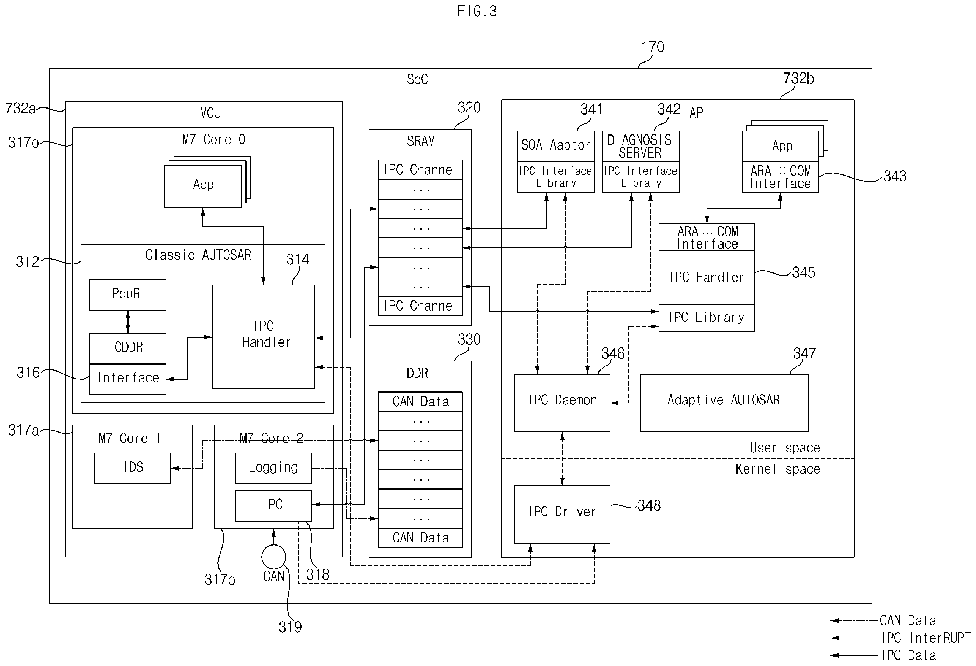

FIG. 3 is an exemplary internal block diagram of a signal processing device of FIG. 2A.

Referring to the drawing, the signal processing device 170 according to an embodiment of the present disclosure includes: a first processor 732a, which based on a first communication scheme, is configured to receive a first message including a sensor signal in a vehicle and to perform signal processing on the received first message; and a second processor 732b, which based a second communication scheme, is configured to receive a second message including a communication message received from an external source and to perform signal processing of the received second message.

In this case, the second communication scheme may have a faster communication speed or a wider bandwidth than the first communication scheme.

For example, the second communication scheme may be Ethernet communication, and the first communication scheme may be CAN communication. Accordingly, the first message may be a CAN message, and the second message may be an Ethernet message.

Meanwhile, the signal processing device 170 according to an embodiment of the present disclosure further includes: a first memory 320 having an IPC channel; and a second memory 330 storing sensor data including vehicle speed data.

For example, the first memory 320 may be a Static RAM (SRAM), and the second memory 330 may be a DDR memory. Particularly, the second memory 330 may be a Double data rate synchronous dynamic random access memory (DDR SDRAM).

Meanwhile, the signal processing device 170 according to an embodiment of the present disclosure includes a shared memory 508 which operates for transmitting the first message or the second message between the first processor 732a and the second processor 732b.

As described above, by performing inter-processor communication using the shared memory 508 during the communication between the first processor 732a and the second processor 732b, latency may be reduced and high-speed data transmission may be performed during inter-processor communication.

Meanwhile, it is desired that the shared memory 508 is provided in the first memory 320. Accordingly, latency may be reduced and high-speed data transmission may be performed during inter-processor communication.

Meanwhile, the first processor 732a may include a plurality of processor cores 317o, 317a, and 317b disposed therein.

Meanwhile, the first processor 732a may further include an interface 319 for receiving the CAN message from external vehicle sensors.

For example, a first processor core 317o included in the first processor 732a may execute a plurality of applications or may execute a first AUTomotive Open System Architecture (AUTOSAR) 312.

Particularly, by executing a second AUTOSAR 312, the first processor core 317o may execute an inter-processor communication (IPC) handler 314.

Meanwhile, the IPC handler 314 may exchange data with the first memory 320 or may exchange IPC data with an application running on the core 317o.

Meanwhile, the IPC handler 314 may exchange an interrupt signal with an IPC driver 348 included in the second processor 732b.

Meanwhile, a second processor core 317a included in the first processor 732a may execute IDS and may receive CAN data from the second memory 330.

Meanwhile, a third core 317b included in the first processor 732a may execute Logging, and may store the CAN data, received through the interface 319, in the second memory 330.

Meanwhile, the third processor core 317b included in the first processor 732a may execute an IPC module 318 to exchange IPC data with the first memory 320.

Meanwhile, the third processor core 317b included in the first processor 732a may transmit an interrupt signal to the IPC driver 348 in the second processor 732b.

The first memory 320 may exchange the IPC data with the IPC handler 314 or the IPC module 318.

Meanwhile, the second processor 732b may execute an application 343, the IPC handler 345, an IPC daemon 346, the IPC driver 348, and the like.

Meanwhile, the second processor 732b may further execute a service oriented architecture (SOA) adapter 341, a diagnosis server 342, and the second AUTOSAR 347.

The second AUTOSAR 347 may be an adaptive AUTOSAR, and the first AUTOSAR 312 may be a classic AUTOSAR.

The IPC daemon 346 may exchange an interrupt signal with the SOA adapter 341, the diagnosis server 342, the IPC handler 345, the IPC driver 348, and the like.

Meanwhile, the first memory 320 may exchange IPC data with the SOA adapter 341, the diagnosis server 342, the IPC handler 345, and the like.

Meanwhile, the IPC data described with reference to FIG. 3 may be the CAN message or Ethernet message.

Meanwhile, the IPC handler 345 may function as a service provider providing data such as diagnosis, firmware, upgrade, system information, etc., based on the second AUTOSAR 347.

Meanwhile, although not illustrated in FIG. 3, the first processor 732a implements a message router (not shown), and the message router may convert a frame of the first message, such as the CAN message, into a frame format of the second message, such as the Ethernet message, and may transmit the converted message to the second processor 732b.

Meanwhile, although not illustrated in FIG. 3, the first processor 732a may further implement a CAN driver (not shown) and a CAN interface (not shown).

For example, the CAN interface (not shown) may be implemented by a total of 16 channels, with eight channels of each of a fourth processor core (not shown) and a fifth processor core (not shown) in the first processor 732a.

In this case, a first CAN interface (not shown) implemented on the fourth processor core (not shown) may correspond to a first queue (PTb) during inter-processor communication, and a second CAN interface (not shown) implemented on the fifth processor core (not shown) may correspond to a second queue (PTb), having a higher priority than the first queue (PTb), during inter-processor communication.

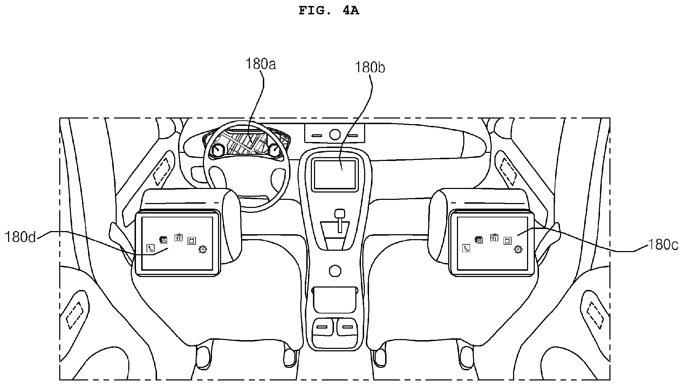

FIG. 4A is a diagram illustrating an example of an arrangement of a vehicle display apparatus in a vehicle according to an embodiment of the present disclosure.

Referring to the figure, a cluster display 180a, an audio video navigation (AVN) display 180b, rear seat entertainment displays 180c and 180d, and a rear-view mirror display (not shown) may be mounted in the vehicle.

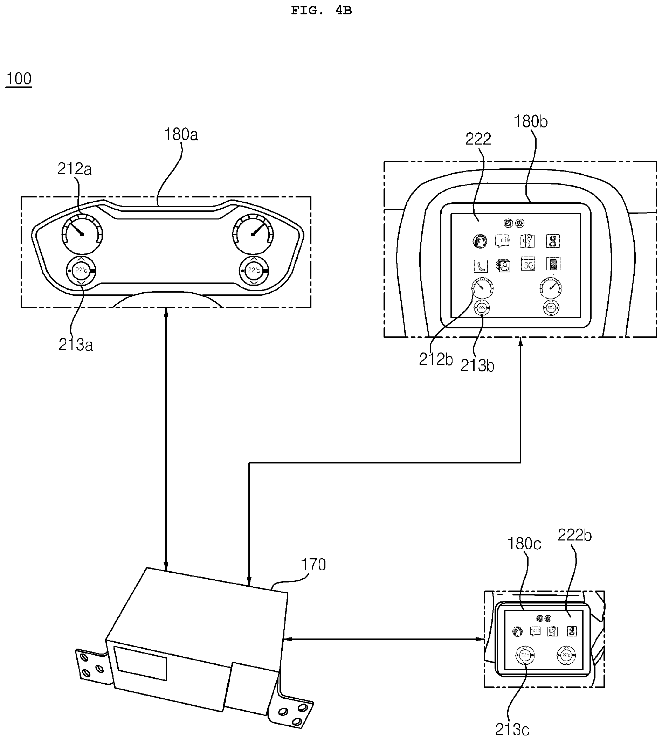

FIG. 4B is a diagram illustrating another example of an arrangement of a vehicle display apparatus in a vehicle according to an embodiment of the present disclosure.

The vehicle display apparatus 100 according to the embodiment of the present disclosure may include a plurality of displays 180a and 180b and a signal processing device 170 configured to perform signal processing in order to display images and information on the plurality of displays 180a and 180b.

The first display 180a, which is one of the plurality of displays 180a and 180b, may be a cluster display 180a configured to display a driving state and operation information, and the second display 180b may be an audio video navigation (AVN) display 180b configured to display vehicle driving information, a navigation map, various kinds of entertainment information, or an image.

The signal processing device 170 may have a processor 175 provided therein, and first to third virtual machines (not shown) may be executed by a hypervisor 505 in the processor 175.

The second virtual machine (not shown) may be operated for the first display 180a, and the third virtual machine (not shown) may be operated for the second display 180b.

Meanwhile, the first virtual machine (not shown) in the processor 175 may be configured to set a shared memory 508 based on the hypervisor 505 for transmission of the same data to the second virtual machine (not shown) and the third virtual machine (not shown). Consequently, the first display 180a and the second display 180b in the vehicle may display the same information or the same images in a synchronized state.

Meanwhile, the first virtual machine (not shown) in the processor 175 shares at least some of data with the second virtual machine (not shown) and the third virtual machine (not shown) for divided processing of data. Consequently, the plurality of virtual machines for the plurality of displays in the vehicle may divide and process data.

Meanwhile, the first virtual machine (not shown) in the processor 175 may receive and process wheel speed sensor data of the vehicle, and may transmit the processed wheel speed sensor data to at least one of the second virtual machine (not shown) or the third virtual machine (not shown). Consequently, at least one virtual machine may share the wheel speed sensor data of the vehicle.

Meanwhile, the vehicle display apparatus 100 according to the embodiment of the present disclosure may further include a rear seat entertainment (RSE) display 180c configured to display driving state information, simple navigation information, various kinds of entertainment information, or an image.

The signal processing device 170 may further execute a fourth virtual machine (not shown), in addition to the first to third virtual machines (not shown), on the hypervisor 505 in the processor 175 to control the RSE display 180c.

Consequently, it is possible to control various displays 180a to 180c using a single signal processing device 170.

Meanwhile, some of the plurality of displays 180a to 180c may be operated based on a Linux Operating System (OS), and others may be operated based on a Web Operating System (OS).

The signal processing device 170 according to the embodiment of the present disclosure may be configured to display the same information or the same images in a synchronized state on the displays 180a to 180c to be operated under various operating systems.

Meanwhile, FIG. 4B illustrates that a vehicle speed indicator 212a and an in-vehicle temperature indicator 213a are displayed on the first display 180a, a home screen 222 including a plurality of applications, a vehicle speed indicator 212b, and an in-vehicle temperature indicator 213b is displayed on the second display 180b, and a second home screen 222b including a plurality of applications and an in-vehicle temperature indicator 213c is displayed on the third display 180c.

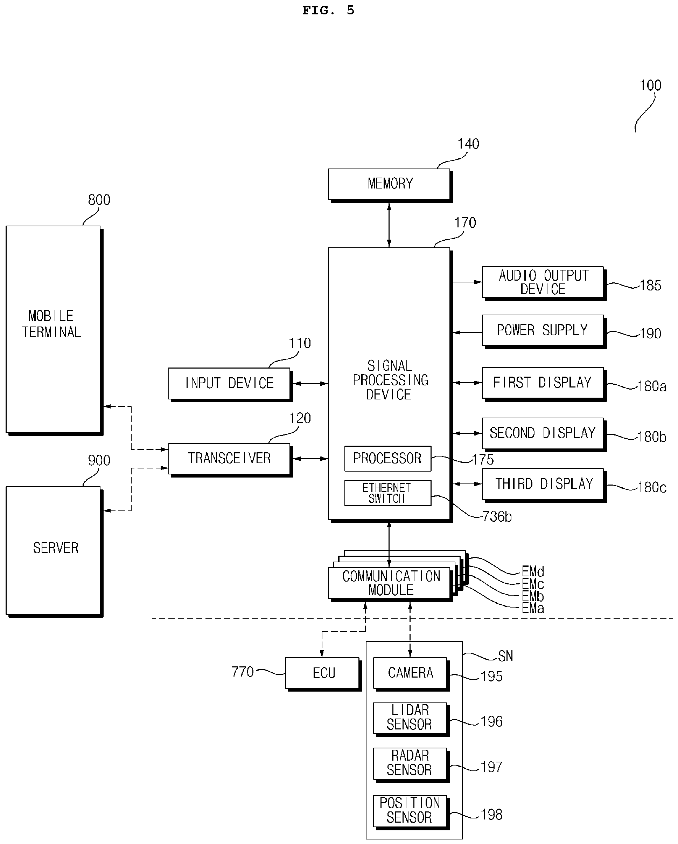

FIG. 5 is an internal block diagram illustrating the vehicle display apparatus of FIG. 4B according to the embodiment of the present disclosure.

Referring to the figure, the vehicle display apparatus 100 according to the embodiment of the present disclosure may include an input device 110, a transceiver 120 for communication with an external device, a plurality of communication modules EMa to EMd for internal communication, a memory 140, a signal processing device 170, a plurality of displays 180a to 180c, an audio output device 185, and a power supply 190.

The plurality of communication modules EMa to EMd may be disposed in a plurality of zones Z1 to Z4, respectively, in FIG. 2A.

Meanwhile, the signal processing device 170 may be provided therein with an Ethernet switch 736b for data communication with the respective communication modules EM1 to EM4.

The respective communication modules EM1 to EM4 may perform data communication with a plurality of sensor devices SN or an ECU 770.

Meanwhile, each of the plurality of sensor devices SN may include a camera 195, a lidar sensor 196, a radar sensor 197, or a position sensor 198.

The input device 110 may include a physical button or pad for button input or touch input.

Meanwhile, the input device 110 may include a microphone (not shown) for user voice input.

The transceiver 120 may wirelessly exchange data with a mobile terminal 800 or a server 900.

In particular, the transceiver 120 may wirelessly exchange data with a mobile terminal of a vehicle driver. Any of various data communication schemes, such as Bluetooth, Wi-Fi, WIFI Direct, and APIX, may be used as a wireless data communication scheme.

The transceiver 120 may receive weather information and road traffic situation information, such as transport protocol expert group (TPEG) information, from the mobile terminal 800 or the server 900. To this end, the transceiver 120 may include a mobile communication module (not shown).

The plurality of communication modules EM1 to EM4 may receive sensor information from an electronic control unit (ECU) 770 or a sensor device SN, and may transmit the received information to the signal processing device 170.

Here, the sensor information may include at least one of vehicle direction information, vehicle position information (global positioning system (GPS) information), vehicle angle information, vehicle velocity information, vehicle acceleration information, vehicle inclination information, vehicle forward/backward movement information, battery information, fuel information, tire information, vehicle lamp information, in-vehicle temperature information, and in-vehicle humidity information.

The sensor information may be acquired from a heading sensor, a yaw sensor, a gyro sensor, a position sensor, a vehicle forward/backward movement sensor, a wheel sensor, a vehicle velocity sensor, a car body inclination sensor, a battery sensor, a fuel sensor, a tire sensor, a steering-wheel-rotation-based steering sensor, an in-vehicle temperature sensor, or an in-vehicle humidity sensor.

Meanwhile, the position module may include a GPS module configured to receive GPS information or a position sensor 198.

Meanwhile, at least one of the plurality of communication modules EM1 to EM4 may transmit position information data sensed by the GPS module or the position sensor 198 to the signal processing device 170.

Meanwhile, at least one of the plurality of communication modules EM1 to EM4 may receive front-of-vehicle image data, side-of-vehicle image data, rear-of-vehicle image data, and obstacle-around-vehicle distance information from the camera 195, the lidar sensor 196, or the radar sensor 197, and may transmit the received information to the signal processing device 170.

The memory 140 may store various data necessary for overall operation of the vehicle display apparatus 100, such as programs for processing or control of the signal processing device 170.

For example, the memory 140 may store data about the hypervisor and first to third virtual machines executed by the hypervisor in the processor 175.

The audio output device 185 may convert an electrical signal from the signal processing device 170 into an audio signal, and may output the audio signal. To this end, the audio output device 185 may include a speaker.

The power supply 190 may supply power necessary to operate components under control of the signal processing device 170. In particular, the power supply 190 may receive power from a battery in the vehicle.

The signal processing device 170 may control overall operation of each device in the vehicle display apparatus 100.

For example, the signal processing device 170 may include a processor 175 configured to perform signal processing for the vehicle displays 180a and 180b.

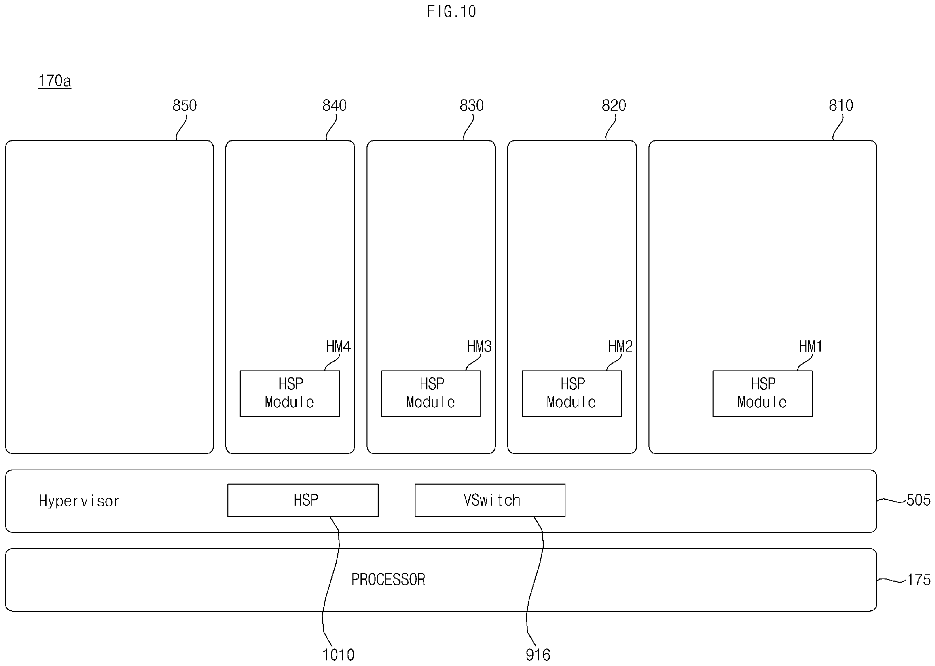

The processor 175 may execute the first to third virtual machines (not shown) on the hypervisor 505 (see FIG. 10) in the processor 175.

Among the first to third virtual machines (not shown) (see FIG. 10), the first virtual machine (not shown) may be called a server virtual machine, and the second and third virtual machines (not shown) and (not shown) may be called guest virtual machines.

For example, the first virtual machine (not shown) in the processor 175 may receive sensor data from the plurality of sensor devices, such as vehicle sensor data, position information data, camera image data, audio data, or touch input data, and may process and output the received sensor data.

As described above, the first virtual machine (not shown) may process most of the data, whereby 1:N data sharing may be achieved.

In another example, the first virtual machine (not shown) may directly receive and process CAN data, Ethernet data, audio data, radio data, USB data, and wireless communication data for the second and third virtual machines (not shown).

Further, the first virtual machine (not shown) may transmit the processed data to the second and third virtual machines (not shown).

Accordingly, only the first virtual machine (not shown), among the first to third virtual machines (not shown), may receive sensor data from the plurality of sensor devices, communication data, or external input data, and may perform signal processing, whereby load in signal processing by the other virtual machines may be reduced and 1:N data communication may be achieved, and therefore synchronization at the time of data sharing may be achieved.

Meanwhile, the first virtual machine (not shown) may be configured to write data in the shared memory 508, whereby the second virtual machine (not shown) and the third virtual machine (not shown) share the same data.

For example, the first virtual machine (not shown) may be configured to write vehicle sensor data, the position information data, the camera image data, or the touch input data in the shared memory 508, whereby the second virtual machine (not shown) and the third virtual machine (not shown) share the same data. Consequently, 1:N data sharing may be achieved.

Eventually, the first virtual machine (not shown) may process most of the data, whereby 1:N data sharing may be achieved.

Meanwhile, the first virtual machine (not shown) in the processor 175 may be configured to set the shared memory 508 based on the hypervisor 505 in order to transmit the same data to the second virtual machine (not shown) and the third virtual machine (not shown).

Meanwhile, the signal processing device 170 may process various signals, such as an audio signal, an image signal, and a data signal. To this end, the signal processing device 170 may be implemented in the form of a system on chip (SOC).

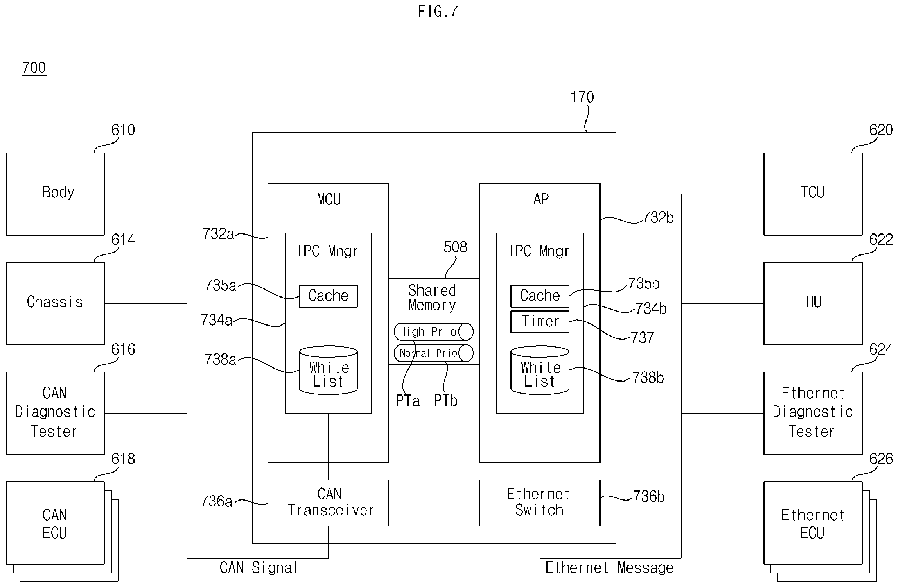

Meanwhile, the signal processing device 170 included in the display apparatus 100 of FIG. 5 may be the same as the signal processing device 170 of a vehicle communication device 700 of FIG. 7 and the like.

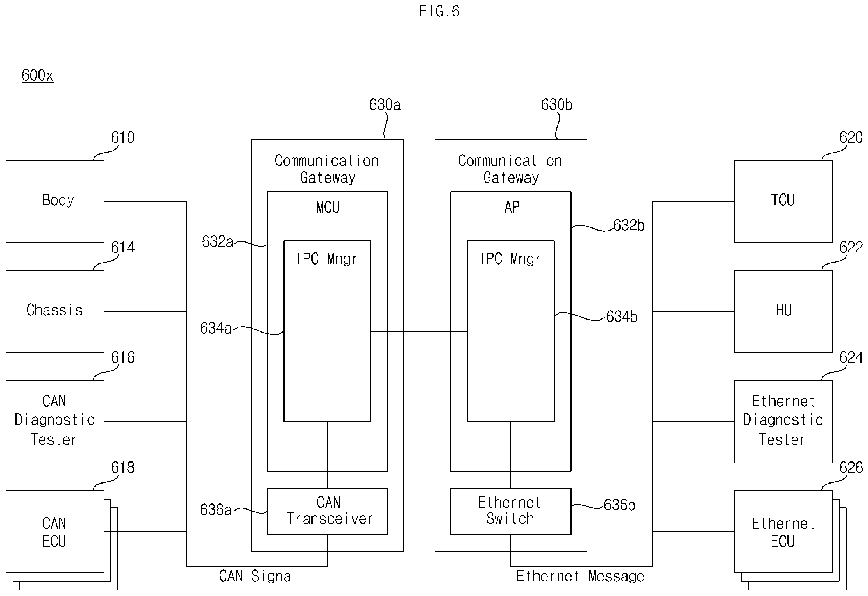

FIG. 6 is an internal block diagram illustrating an example of a vehicle communication device.

Referring to the drawing, a vehicle communication device 600x associated with the present disclosure may include a first communication gateway 630a and a second communication gateway 630b.

The first communication gateway 630a may include a body module 610, a chassis module 614, a CAN diagnostic tester 616, a CAN transceiver 636a for exchanging a CAN signal by CAN communication with at least one CAN ECU 618 and the like, and a first processor 632a for performing signal processing on the CAN signal received from the CAN transceiver 636a.

Meanwhile, the first processor 632a may include an IPC manager 634a for inter-processor communication with a second processor 632b in the second communication gateway 630b.

The second communication gateway 630b may include a telematics control module 620, a head module 622, an Ethernet diagnostic tester 624, an Ethernet switch 636b for exchanging an Ethernet message by Ethernet communication with at least one Ethernet ECU 626, and a second processor 632b for performing signal processing on the Ethernet message received from the Ethernet switch 636b.

Meanwhile, the second processor 632b may include an IPC manager 634b for inter-processor communication with the first processor 632a in the first communication gateway 630a.

Meanwhile, the IPC manager 634a in the first processor 632a and the IPC manager 643b in the second processor 632b may perform inter-processor communication based on the Ethernet communication.

While the inter-processor communication is suitable for high-speed transmission of large data using a high bandwidth based on Ethernet, the communication method has a drawback in that latency occurs in communication between a protocol stack and a Physical Layer (PHY).

Accordingly, the present disclosure provides a method of reducing latency and performing high-speed data transmission during inter-processor communication, which will be described below with reference to FIG. 7 and subsequent figures.

FIG. 7 is an internal block diagram illustrating another example of a vehicle communication device.

Referring to the drawing, the vehicle communication device 700 according to an embodiment may include: a first processor 732a, which based on a first communication scheme along with a first communication gateway 730a and a second communication gateway 730b, is configured to receive a first message including a sensor signal in a vehicle and to perform signal processing on the received first message; a second processor 732b, which based a second communication scheme, is configured to receive a second message including a communication message received from an external source and to perform signal processing of the received second message; and a shared memory 508 configured to operate to transmit the first message or the second message between the first processor 732a and the second processor 732b.

In comparison with the communication device 600x of FIG. 6, by using the shared memory 508 for inter-processor communication (IPC) between the first processor 732a and the second processor 732b, it is possible to reduce latency and to perform high-speed data transmission during the inter-processor communication.

In addition, in comparison with the communication device 600x of FIG. 6, by providing the first processor 732a, the second processor 732b, and the shared memory 508 in one signal processing device 170 implemented as a single chip, it is possible to reduce latency and to perform high-speed data transmission during the inter-processor communication.

Meanwhile, it is preferred that the second communication scheme has a faster communication speed or a wider bandwidth than the first communication scheme.

For example, the second communication scheme may be Ethernet communication, and the first communication scheme may be CAN communication. Accordingly, the first message may be a CAN message, and the second message may be an Ethernet message.

Meanwhile, the signal processing device 170 and the vehicle communication device 700 including the same according to an embodiment of the present disclosure may further include: a transceiver 736a, which based on the first communication scheme, is configured to receive a first message including a sensor signal in a vehicle and transmit the first message to the first processor 732a; and the switch 736b, which based on the second communication scheme, is configured to receive a second message including a communication message received from an external source, and transmit the second message to the second processor 732b, such that the first and second messages may be transmitted stably to the first processor 732a and the second processor 732b.

The first processor 732a or the transceiver 736a may exchange a CAN signal by CAN communication with the body module 610, the chassis module 614, the CAN diagnostic tester 616, at least one CAN ECU 618, and the like.

Meanwhile, the first processor 732a may include a first manager 734a for inter-processor communication (IPC) with the second processor 732b. The first manager 734a may be referred to as an IPC manager.

Meanwhile, the first manager 734a may include a first cache 735a.

Meanwhile, the second processor 732b or the switch 736b may exchange an Ethernet message by Ethernet communication with the telematics control module 620, the head module 622, the Ethernet diagnostic tester 624, at least one Ethernet ECU 626, and the like. The switch 736b may be referred to as an Ethernet switch.

Meanwhile, the second processor 732b may include a second manager 734b for inter-processor communication (IPC) with the first processor 732a. The second manager 734a may be referred to as an IPC manager.

Meanwhile, the second manager 734b may include the second manager 734b including a second cache 735b and a timer 737.

Meanwhile, the second processor 723b may receive a request for periodic subscription to the first message from the Ethernet processor or the Ethernet ECU 626.

Accordingly, the second processor 732b may transmit the request for periodic subscription to the first message to the first processor 732a.

Particularly, the second processor 732b may transmit the subscription request through the inter-processor communication (IPC). Accordingly, the inter-processor communication may be performed.

Meanwhile, the first processor 732a may periodically receive CAN data from the at least one CAN ECU 618 and the like.

For example, the first processor 732a periodically receives the first message, predefined in a CAN database (DB), from the at least one CAN ECU 618 and the like.

For example, the periodic first message, which is sensor information, may include vehicle speed information, position information, or the like.

In another example, the periodic first message may include at least one of vehicle direction information, vehicle position information (GPS information), vehicle angle information, vehicle acceleration information, vehicle tilt information, forward/backward movement information, battery information, fuel information, tire information, vehicle lamp information, in-vehicle temperature information, and in-vehicle humidity information.

Meanwhile, the first processor 732a may select a first message, for which the subscription is requested, among the periodically received CAN data or first messages, and may transmit the first message, for which the subscription is requested, to the second processor 732b.

Meanwhile, the first processor 732a may separately process a first message, for which the subscription is not requested, among the periodically received CAN data or first messages, without transmitting the message to the second processor 732b.

Specifically, upon receiving the first message for which the subscription is requested, the first processor 732a may store the first message in the first cache 735a or may manage the first message. Upon receiving the first message, the first processor 732a may compare the first message with a value stored in the first cache 735a, and in the case in which a difference therebetween is greater than or equal to a predetermined value, the first processor 732a may transmit the first message to the second processor 732b through the inter-processor communication.

Meanwhile, upon receiving the first message for which the subscription is requested, the first processor 732a may store the first message in the first cache 735a or may manage the first message. Upon receiving the first message, the first processor 732a may compare the first message with a value stored in the first cache 735a, and in the case in which a difference therebetween is greater than or equal to a predetermined value, the first processor 732a may transmit the first message to the second processor 732b through the inter-processor communication using the shared memory 508.

For example, upon receiving the first message, the first processor 732a may compare the message with a value stored in the first cache 735a, and in the case in which the two are not the same, the first processor 732a may transmit the first message to the second processor 732b through the inter-processor communication using the shared memory 508.

In another example, upon receiving the first message, the first processor 732a may compare the message with the value stored in the first cache 735a, and in the case in which the two are the same, the first processor 732a may not transmit the first message to the second processor 732b.

Accordingly, by minimizing cache occupancy or buffer occupancy of the same data, it is possible to reduce latency and to perform high-speed data transmission during inter-processor communication.

Meanwhile, upon first receiving the first message, the second processor 732b may store the first message in the second cache 735b, and upon subsequently receiving the first message, the second processor 732b may update the second cache 735b. Accordingly, it is possible to reduce latency and to perform high-speed data transmission during inter-processor communication.

Meanwhile, upon receiving the first message, the second processor 732b may generate a thread of the timer 737, and each time the thread terminates, the second processor 732b may transmit a value in the second cache 735b to the Ethernet processor or the Ethernet ECU 626. Accordingly, it is possible to reduce latency and to perform high-speed data transmission during inter-processor communication.

Meanwhile, during a period in which the inter-processor communication is not performed such that the first message is not received, the second processor 732b may transmit a value in the second cache 735b to the Ethernet processor or the Ethernet ECU 626.

That is, in the case in which a value of the subscribed first message is constant during the period, the cache value stored in the second processor 732b may be transmitted to the Ethernet processor 626 without the inter-processor communication.

Accordingly, it is possible to minimize the usage of the IPC buffer in the shared memory 508 which operates in FIFO mode. In addition, by maintaining the usage of the IPC buffer to a minimum, data including the first message, the second message, or the like may be transmitted rapidly through the inter-processor communication.

Meanwhile, during a period in which the inter-processor communication is performed such that the first message is received, the second processor 732b may transmit a value in the updated second cache 735b to the Ethernet processor or the Ethernet ECU 626. Accordingly, it is possible to reduce latency and to perform high-speed data transmission during inter-processor communication.

Meanwhile, during the inter-processor communication, the shared memory 508 may transmit data between the first processor 732a and the second processor 732b through a first queue PTb and a second queue PTa having a higher priority than the first queue PTb.

Particularly, even when the number of events for the inter-processor communication increases, the shared memory 508 may transmit only the data, corresponding to events allocated for the second queue PTa, through the second queue PTa. Accordingly, real-time transmission of a high priority event may be ensured during the inter-processor communication.

For example, the first PTb may be a normal priority queue, and the second queue PTa may be a high priority queue.

Specifically, the shared memory 508 may transmit most of the data through the first queue PTb during the inter-processor communication.

However, the share memory 508 may transmit only time sensitive-critical data without delay through the second queue PTa which is a higher priority queue than the first queue PTb.

For example, the time sensitive-critical data may be speed data, position information data, or the like.

That is, the shared memory 508 may transmit the speed data or position information data between the first processor 732a or the second processor 732b through the second queue PTa. Accordingly, real-time transmission of the speed data or the position information data having a high priority may be ensured during the inter-processor communication.

Meanwhile, the first processor 732a or the second processor 732b may manage a list of applications capable of using the second queue PTa.

For example, the second processor 732b may include an application for displaying speed information, as an application capable of using the second queue PTa, in a second list 738b and may manage the list.

Meanwhile, for real-time transmission through the second queue PTa, a minimum operation is preferred so that there may be no redundant scenarios or applications.

As described above, by transmitting the time sensitive-critical data in real time using the second queue PTa, real-time transmission of a high priority event may be ensured during the inter-processor communication.

Meanwhile, during the inter-processor communication, the shared memory 508 may reduce latency and may perform high-speed data transmission by assigning at least two queues.

In the drawing, an example is illustrated in which the fist manager 734a in the first processor 732a manages a first list 738a which is a whitelist, and the second manager 734b in the second processor 732b manages a second list 738b which is a whitelist, thereby ensuring the real-time transmission of a high-priority event during the inter-processor communication.

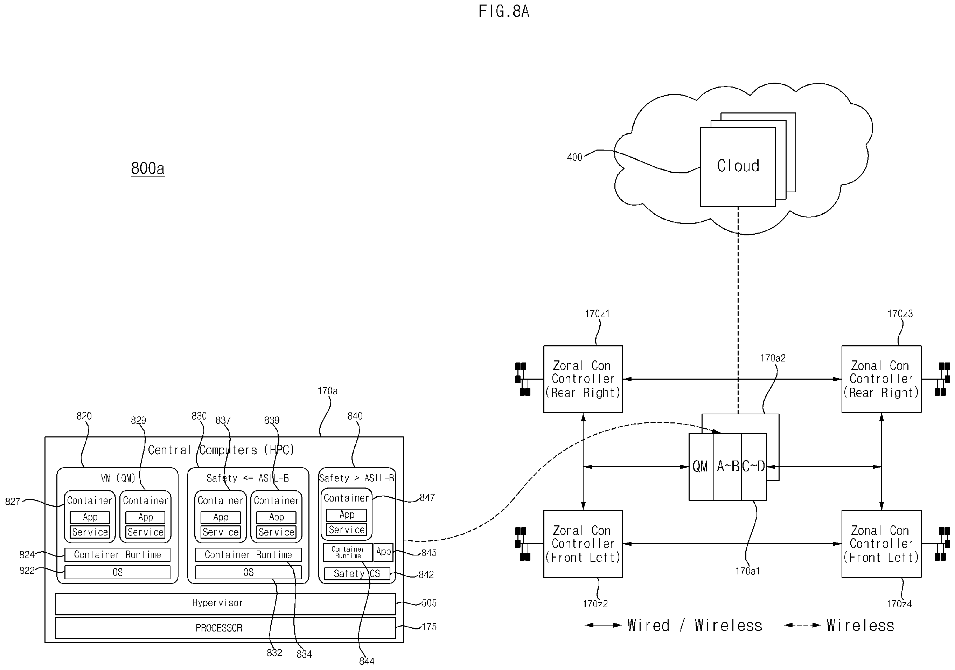

FIGS. 8A to 8D are diagrams illustrating various examples of a vehicle communication device according to an embodiment of the present disclosure.

FIG. 8A is a diagram illustrating an example of a vehicle communication device according to an embodiment of the present disclosure.

Referring to the drawing, a vehicle communication device 800a according to an embodiment of the present disclosure includes signal processing devices 170a1 and 170a2 and a plurality of zonal signal processing devices 170Z1 to 170Z4.

Meanwhile, two signal processing devices 170a1 and 170a2 are illustrated in the drawing, which are provided for backup and the like, and one signal processing device is also possible.

Meanwhile, the signal processing devices 170a1 and 170a2 may be referred to as a High Performance Computing (HPC) signal processing devices.

The plurality of zonal signal processing devices 170Z1 to 170Z4 may be located in the respective zones Z1 to Z4 and may transmit sensor data to the signal processing devices 170a1 and 170a2.

The signal processing devices 170a1 and 170a2 may receive data by wire from the plurality of zonal signal processing devices 170Z1 to 170Z4 or a communication device 120.

In the drawing, an example is illustrated in which the signal processing devices 170a1 and 170a2 exchange data with the plurality of zonal signal processing devices 170Z1 to 170Z4 based on wired communication, and the signal processing devices 170a1 and 170a2 exchange data with the server 400 based on wireless communication, but the communication device 120 may exchange data with the server 400 based on wireless communication, and the signal processing devices 170a1 and 170a2 may exchange data with the communication device 120 based on wired communication.

Meanwhile, the data received by the signal processing devices 170a1 and 170a2 may include camera data or sensor data.

For example, the in-vehicle sensor data may include at least one of vehicle wheel speed data, vehicle direction data, vehicle location data (global positioning system (GPS) data), vehicle angle data, vehicle speed data, vehicle acceleration data, vehicle inclination data, vehicle forward/backward movement data, battery data, fuel data, tire data, vehicle lamp data, in-vehicle temperature data, in-vehicle humidity data, external vehicle radar data, and external vehicle lidar data.

Meanwhile, the camera data may include external vehicle camera data and in-vehicle camera data.

Meanwhile, the signal processing devices 170a1 and 170a2 may execute a plurality of virtual machines 820, 830, and 840 based on safety levels.

In the drawing, an example is illustrated in which the processor 175 in the signal processing device 170a executes the hypervisor 505, and executes first to third virtual machines 820 to 840 on the hypervisor 505 according to the Automotive Safety Integrity Level (ASIL).

The first virtual machine 820 may be a virtual machine corresponding to the quality management (QM) level which is the lowest risk level of the ASIL with no mandatory need.

The first virtual machine 820 may execute an operating system 822, a container runtime 824 on the operating system 822, and containers 827 and 829 on the container runtime 824.

The second virtual machine 820 may be a virtual machine corresponding to ASIL A or ASIL B with the combination of severity, exposure, and controllability values being 7 or 8.

The second virtual machine 820 may execute an operating system 832, a container runtime 834 on the operating system 832, and containers 837 and 839 on the container runtime 834.

The third virtual machine 840 may be a virtual machine corresponding to ASIL C or ASIL D with the combination of severity, exposure, and controllability values being 9 or 10.

Meanwhile, ASIL D may correspond to a grade that requires the highest level of safety.

The third virtual machine 840 may execute a safety operating system 842 and an application 845 on the operating system 842.

Meanwhile, the third virtual machine 840 may also execute the safety operating system 842, a container runtime 844 on the safety operating system 842, and a container 847 on the container runtime 844.

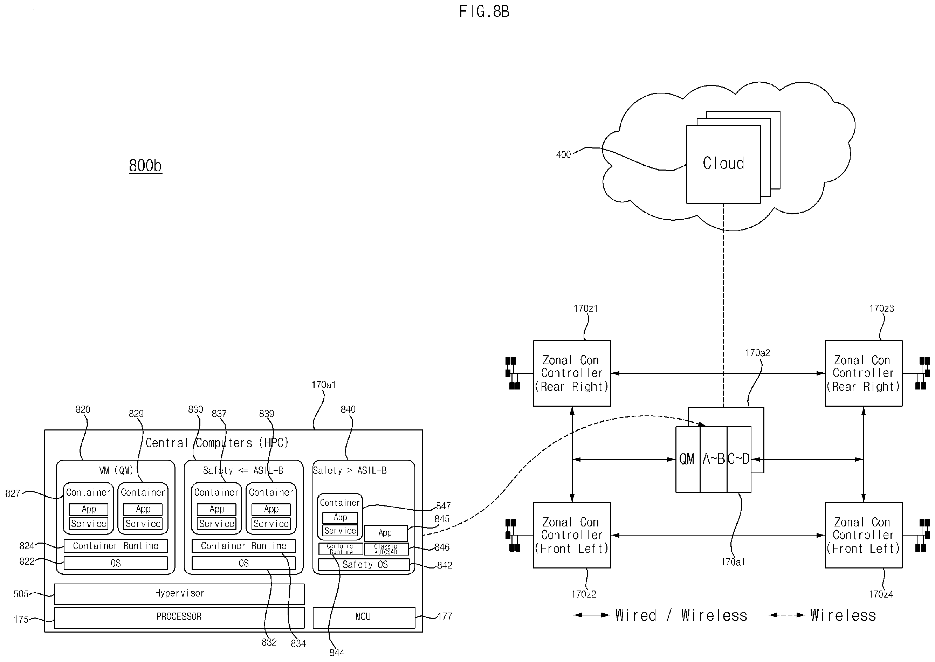

Meanwhile, unlike the drawing, the third virtual machine 840 may also be executed by a separate core, rather than by the processor 175, which will be described below with reference to FIG. 8B.

Meanwhile, the processor 175 that executes the first to third virtual machines 820 to 840 may correspond to the second processor 732b of FIG. 7.

FIG. 8B is a diagram illustrating another example of a vehicle communication device according to an embodiment of the present disclosure.

Referring to the drawing, a vehicle communication device 800b according to an embodiment of the present disclosure includes the signal processing devices 170a1 and 170a2 and the plurality of zonal signal processing devices 170Z1 to 170Z4.

The vehicle communication device 800b of FIG. 8B is similar to the vehicle communication device 800a of FIG. 8A, with a difference being that the signal processing device 170a1 of FIG. 8B is partially different from the signal processing device 170a1 of FIG. 8A.

The following description will focus on the difference, in which the signal processing device 170a may include a processor 175 and a second processor 177.

The processor 175 in the signal processing device 170a1 executes the hypervisor 505, and executes the first and second virtual machines 820 and 830 on the hypervisor 505 according to the ASIL.

The first virtual machine 820 may execute the operating system 822, the container runtime 824 on the operating system 822, and the containers 827 and 829 on the container runtime 824.

The second virtual machine 820 may execute the operating system 832, the container runtime 834 on the operating system 832, and the containers 837 and 839 on the container runtime 834.

Meanwhile, the second processor 177 in the signal processing device 170a1 may execute the third virtual machine 840.

The third virtual machine 840 may execute the safety operating system 842, an AUTOSAR 846 on the operating system 842, and an application 845 on the AUTOSAR 846. That is, unlike FIG. 8A, the third virtual machine 840 may further execute the AUTOSAR 846 on the operating system 842.

Meanwhile, similarly to FIG. 8A, the third virtual machine 840 may also execute the safety operating system 842, the container runtime 844 on the safety operating system 842, and the container 847 on the container runtime 844.

Meanwhile, unlike the first and second virtual machines 820 and 830, the third virtual machine 840 that requires a high safety level is desirably executed by the second processor 177 that is a different core or a different processor.

Meanwhile, the processor 175 that executes the first and second virtual machines 820 and 830 may correspond to the second processor 732b of FIG. 7, and the second processor 177 that executes the third virtual machine 840 may correspond to the first processor 732a of FIG. 7.

Meanwhile, in the signal processing devices 170a and 170a2 of FIGS. 8A and 8B, in response to abnormality in the first signal processing device 170a, the second signal processing device 170a2 may operate which is provided for backup purposes.

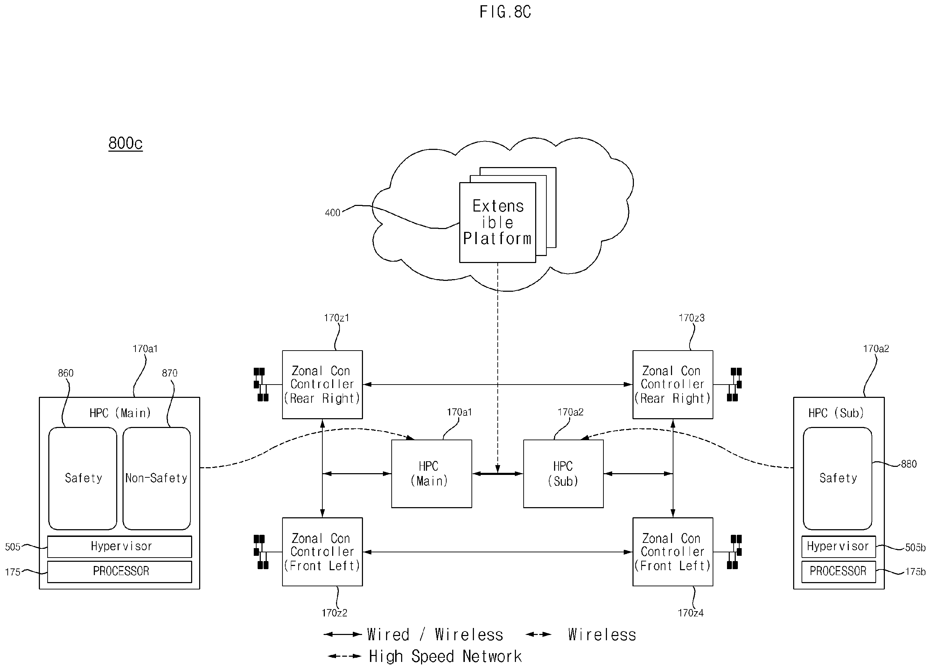

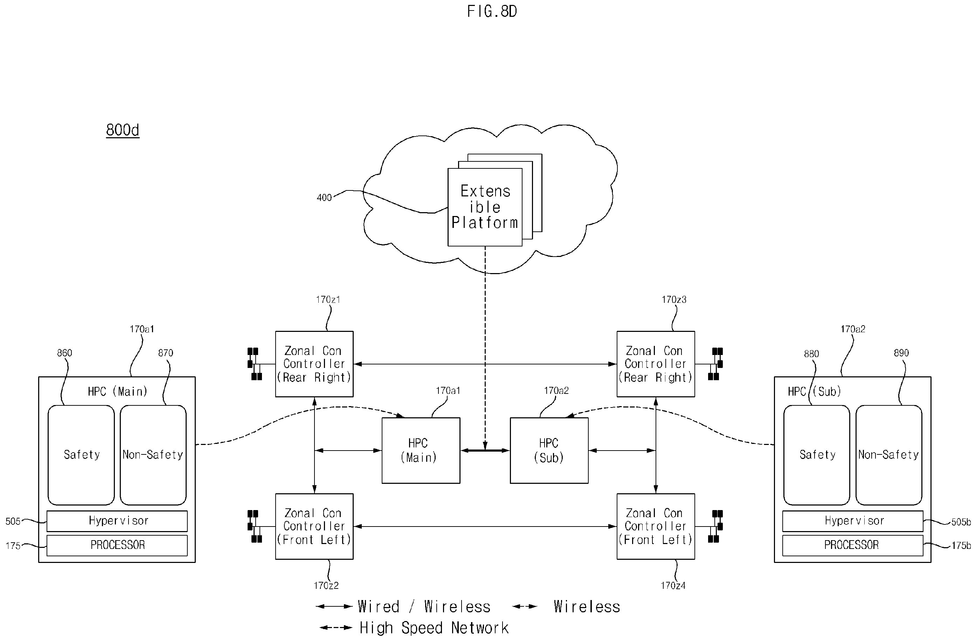

Unlike the example, the signal processing devices 170a and 170a2 may operate at the same time, among which the first signal processing device 170a may operate as a main device, and the second signal processing device 170a2 may operate as a sub-device, which will be described below with reference to FIGS. 8C and 8D.

FIG. 8C is a diagram illustrating yet another example of a vehicle communication device according to an embodiment of the present disclosure.

Referring to the drawing, a vehicle communication device 800c according to an embodiment of the present disclosure includes the signal processing devices 170a and 170a2 and the plurality of zonal signal processing devices 170Z1 to 170Z4.

Meanwhile, two signal processing devices 170a1 and 170a2 are illustrated in the drawing, which are provided for backup and the like, and one signal processing device is also possible.

Meanwhile, the signal processing devices 170a1 and 170a2 may be referred to as a High Performance Computing (HPC) signal processing devices.

The plurality of zonal signal processing devices 170Z1 to 170Z4 may be located in the respective zones Z1 to Z4 and may transmit sensor data to the signal processing devices 170a1 and 170a2.

The signal processing devices 170a1 and 170a2 may receive data by wire from the plurality of zonal signal processing devices 170Z1 to 170Z4 or a communication device 120.

In the drawing, an example is illustrated in which the signal processing devices 170a1 and 170a2 exchange data with the plurality of zonal signal processing devices 170Z1 to 170Z4 based on wired communication, and the signal processing devices 170a1 and 170a2 exchange data with the server 400 based on wireless communication, but the communication device 120 may exchange data with the server 400 based on wireless communication, and the signal processing devices 170a1 and 170a2 may exchange data with the communication device 120 based on wired communication.

Meanwhile, the data received by the signal processing devices 170a1 and 170a2 may include camera data or sensor data.

Meanwhile, the processor 175 in the first signal processing device 170a1 of the signal processing devices 170a1 and 170a2 may execute the hypervisor 505, and may execute each of a safety virtual machine 860 and a non-safety virtual machine 870 on the hypervisor 505.

Meanwhile, the processor 175b in the second signal processing device 170a2 of the signal processing devices 170a1 and 170a2 may execute the hypervisor 505b, and may execute only a safety virtual machine 880 on the hypervisor 505.

In the method, safety and non-safety virtual machines may be processed separately by the first signal processing device 170a1 and the second signal processing device 170a2, thereby improving stability and processing speed.

Meanwhile, high-speed network communication may be performed between the first signal processing device 170a1 and the second signal processing device 170a2.

FIG. 8D is a diagram illustrating yet another example of a vehicle communication device according to an embodiment of the present disclosure.

Referring to the drawing, a vehicle communication device 800d according to an embodiment of the present disclosure includes the signal processing devices 170a1 and 170a2 and the plurality of zonal signal processing devices 170Z1 to 170Z4.

The vehicle communication device 800d of FIG. 8D is similar to the vehicle communication device 800c of FIG. 8C, with a difference being that the second signal processing device 170a2 of FIG. 8D is partially different from the second signal processing device 170a2 of FIG. 8C.

The processor 175b in the second signal processing device 170a2 of FIG. 8D may execute the hypervisor 505b, and may execute each of a safety virtual machine 880 and a non-safety virtual machine 890 on the hypervisor 505.

That is, unlike FIG. 8C, the processor 175b in the second signal processing device 170a2 further executes the non-safety virtual machine 890.

In the method, safety and non-safety virtual machines may be processed separately by the first signal processing device 170a1 and the second signal processing device 170a2, thereby improving stability and processing speed.

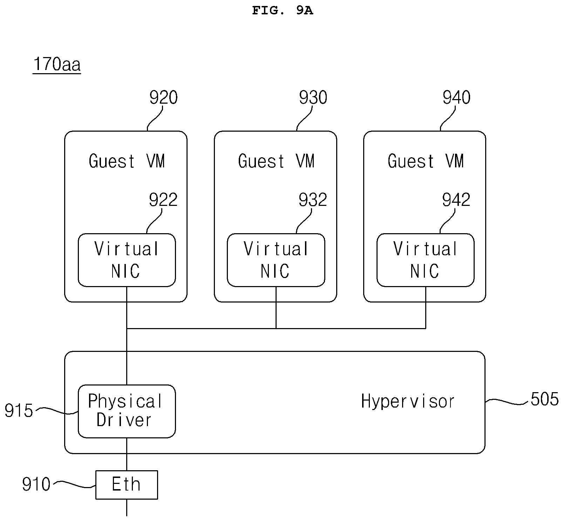

FIGS. 9A to 9F are diagrams illustrating various examples of data transmission schemes of a signal processing device of FIGS. 8A to 8D.

FIG. 9A is a diagram illustrating an example of a data transmission scheme of a signal processing device.

Referring to the drawing, the processor 175 in a signal processing device 170aa receives data by wire through an Ethernet terminal 910 which is a communication terminal, and processes the received data.

The processor 175 executes a plurality of virtual machines 920 to 940 on the executed hypervisor 505.

The processor 175 transmits data from the Ethernet terminal 910 to virtual network interfaces 922, 932, and 942 in the respective virtual machines 920 to 940 via a physical driver executed in the hypervisor 505.

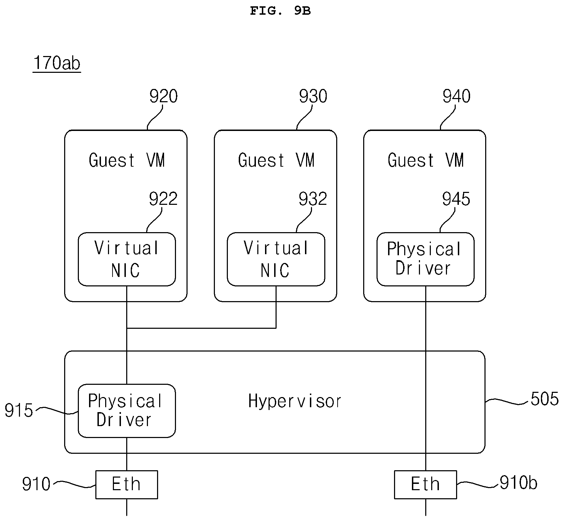

FIG. 9B is a diagram illustrating another example of a data transmission scheme of a signal processing device.

Referring to the drawing, the processor 175 in a signal processing device 170ab may receive data by wire through a plurality of Ethernet terminals 910 and 910b, and may transmit the data from the Ethernet terminal 910 to the virtual network interfaces 922 and 932 in the first and second virtual machines 920 and 930 via the physical driver 915 executed in the hypervisor 505 and may transmit the data from a second Ethernet terminal 910b to a physical driver 945 in the third virtual machine 940.

Meanwhile, it is illustrated in the drawing that there are the plurality of Ethernet terminals 910 and 910b, but unlike the example, data from different sources may be received in a time-division manner and the like via a single Ethernet terminal, such that some of the data may be transmitted to the virtual network interfaces 922 and 932 in the first and second virtual machines 920 and 930 via the physical driver 915 executed in the hypervisor 505, and another part of the data may be transmitted to the physical driver 945 in the third virtual machine 940.

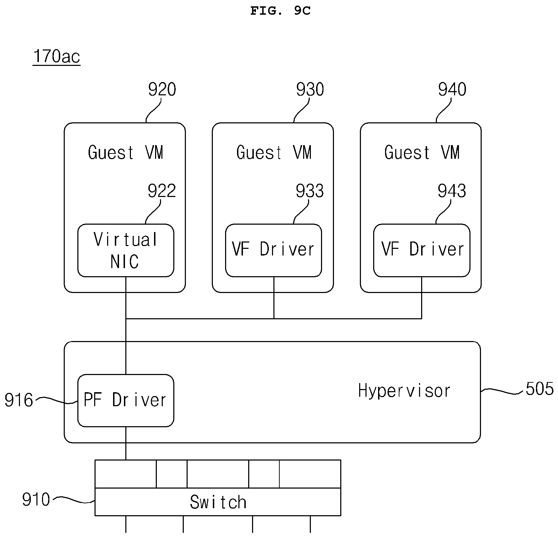

FIG. 9C is a diagram illustrating yet another example of a data transmission scheme of a signal processing device.

Referring to the drawing, the processor 175 in a signal processing device 170ac receives data by wire through an Ethernet switch 910 which is a communication terminal, and processes the received data.

The processor 175 executes the plurality of virtual machines 920 to 940 on the executed hypervisor 505.

The processor 175 transmits data from the Ethernet switch 910 to a virtual network interface 922 or virtual drivers 933 and 943 in the respective virtual machines 920 to 940 via a physical driver 916 executed in the hypervisor 505.

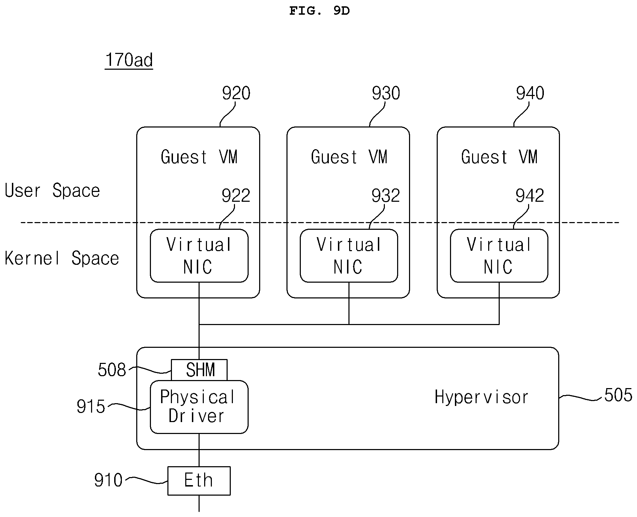

FIG. 9D is a diagram illustrating further another example of a data transmission scheme of a signal processing device.

Referring to the drawing, the processor 175 in a signal processing device 170ad may receive data by wire through the Ethernet terminal 910, and may transmit data from the Ethernet terminal 910 to the virtual network interfaces 922, 932, and 942 in the first to third virtual machines 920 to 940 via the physical driver 915 executed in the hypervisor 505 and the shared memory 508.

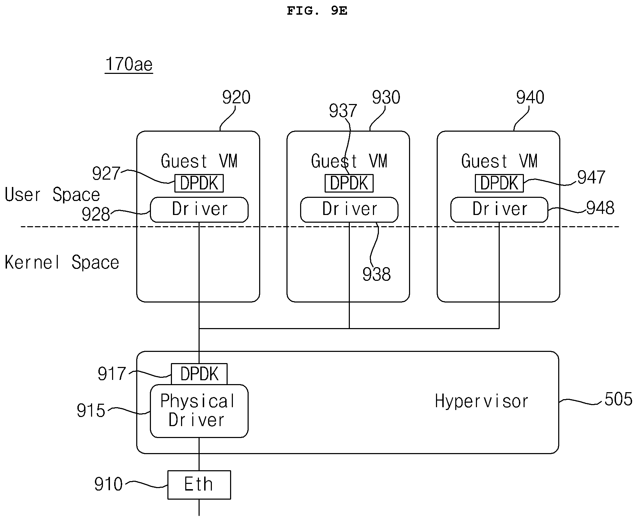

FIG. 9E is a diagram illustrating yet another example of a data transmission scheme of a signal processing device.

Referring to the drawing, the processor 175 in a signal processing device 170ae may receive data by wire through the Ethernet terminal 910, and may transmit the data from the Ethernet terminal 910 to each of drivers 928, 938, and 948 or Data Plane Development Kits (DPDKs) 927, 937, and 947 in a user space within the first to third virtual machines 920 to 940 via the physical driver 915 executed in the hypervisor 505 and a DPDK 917 which is a packet processing method.

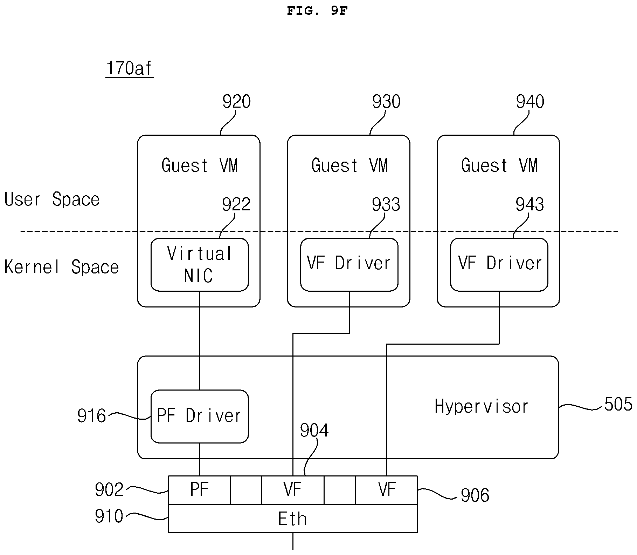

FIG. 9F is a diagram illustrating yet another example of a data transmission scheme of a signal processing device.

Referring to the drawing, the processor 175 in a signal processing device 170af may receive data by wire through the Ethernet terminal 910, and may transmit some of the data to the virtual network interface 922 in the first virtual machine 920 through physical switching 916 and the physical driver 915 executed in the hypervisor 505, and may transmit another part of the data to the physical driver 943 in the third virtual machine 940 through virtual switching.

FIG. 10 is a diagram illustrating an example of a signal processing device according to an embodiment of the present disclosure.

Referring to the drawing, the signal processing device 170a according to an embodiment of the present disclosure includes the processor 175 configured to receive data by wire from the plurality of zonal signal processing devices 170Z1 to 170Z4 or the communication device 120, and to process the received data.

The processor 175 executes the hypervisor 505 and executes the plurality of virtual machines 810 to 850 on the hypervisor 505, and transmits the received data to at least one virtual machine based on physical switching or virtual switching. Accordingly, the received data may be efficiently processed. Particularly, the received data may be processed efficiently, rapidly, and stably.

Meanwhile, based on at least one of safety, frequency, or size of the received data, the processor 175 may change a transmission scheme for transmitting the data to at least one virtual machine. Accordingly, the received data may be efficiently processed.

Meanwhile, the processor 175 may execute a data processing manager 1010 in the hypervisor 505, in which based on at least one of safety, frequency, or size of the received data, the data processing manager 1010 may change a transmission scheme for transmitting the data to at least one virtual machine. Accordingly, the received data may be efficiently processed.

Meanwhile, the processor 175 may execute a virtual switch 916 in the hypervisor 505.

Meanwhile, the processor 175 may perform physical switching or virtual switching in the hypervisor 505.

Meanwhile, a first virtual machine 810 among the plurality of virtual machines 810 to 850 corresponds to a system service virtual machine, a second virtual machine among the plurality of virtual machines corresponds to a virtual machine with a quality management level (e.g., QM), a third virtual machine among the plurality of virtual machines corresponds to a virtual machine with a specific safety level (e.g., ASIL B), and a fourth virtual machine among the plurality of virtual machines corresponds to a virtual machine acting as a master node for orchestration.

Meanwhile, the first to third virtual machines 830 may correspond to a worker node virtual machine, thereby enabling data transmission based on orchestration.

Meanwhile, the processor 175 may execute a fifth virtual machine 850 corresponding to a highest risk classification level (e.g., ASIL D).

Meanwhile, unlike the drawing, the processor 175 may execute the fifth virtual machine 850, corresponding to the highest risk classification level, via a separate core or processor that is different from the first to fourth virtual machines 840. Accordingly, data corresponding to the highest risk classification level may be stably processed.

Meanwhile, the hypervisor 505 executes a data processing manager HSP 1010, and the first to fourth virtual machines 840 execute high-speed packet processing modules (HSP modules) HM1 to HM4, and in response to executing the data processing manager 1010, data may be transmitted to at least one of the high-speed packet processing modules HM1 to HM4 of the first to fourth virtual machines 840. Accordingly, the received data may be efficiently processed.

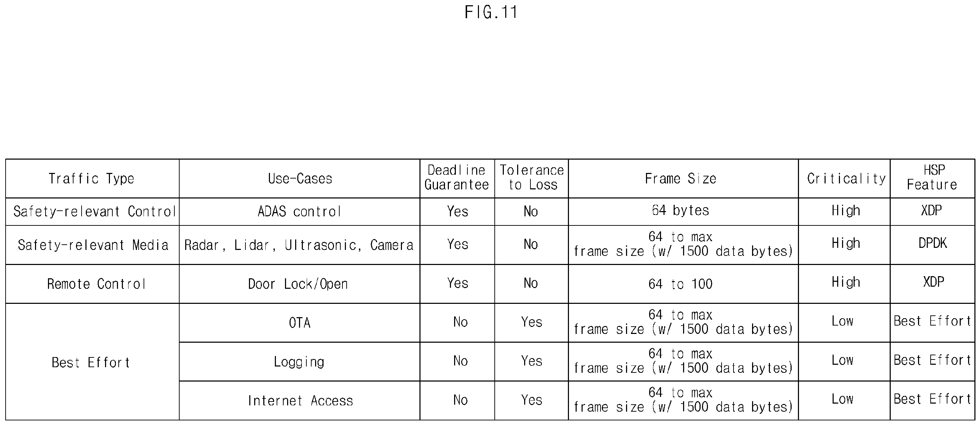

FIGS. 11 to 15 are diagrams referred to in the description of FIG. 10.

FIG. 11 is a diagram illustrating an example of selecting High Speed Packet (HSP) Feature of data based on Traffic Type, Use-Cases, Deadline Guarantee, Tolerance, and the like.

Referring to the drawing, the data processing manager HSP 101 may select HSP Feature based on Traffic Type, Use-Cases, Deadline Guarantee, Tolerance, and the like of the received data.

For example, in the case in which a traffic type of first data is Safety-relevant Control, Use-Case thereof is ADAS control, Deadline Guarantee is required and Tolerance is not required, and the first data has a frame size of 64 bytes with high criticality, the data processing manager HSP 1010 may select a high-speed data path method (e.g., eXpress Data Path (XDP)) for transmitting the data.

In another example, in the case in which a traffic type of second data is Safety-relevant Media, Use-Cases thereof are Radar, Lidar, Ultrasonic, Camera, Deadline Guarantee is required, and Tolerance is not required, and the second data has a frame size of a maximum of 64 bytes with high criticality, the data processing manager HSP 1010 may select a packet processing method (e.g., Data Plane Development Kit (DPDK)) for transmitting the data.

In yet another example, in the case in which a traffic type of third data is Remote Control, Use-Case thereof is Door Lock/Open, Deadline Guarantee is required and Tolerance is not required, and the third data has a frame size of 64 bytes to 100 bytes with high criticality, the data processing manager HSP 1010 may select a high-speed data path method (e.g., eXpress Data Path (XDP)) for transmitting the data.

Meanwhile, in the case in which Use-Cases of data are OTA, Diagnostics, Logging, Internet Access, etc., the data processing manager HSP 1010 may select an optimal transmission scheme among a plurality of transmission schemes.

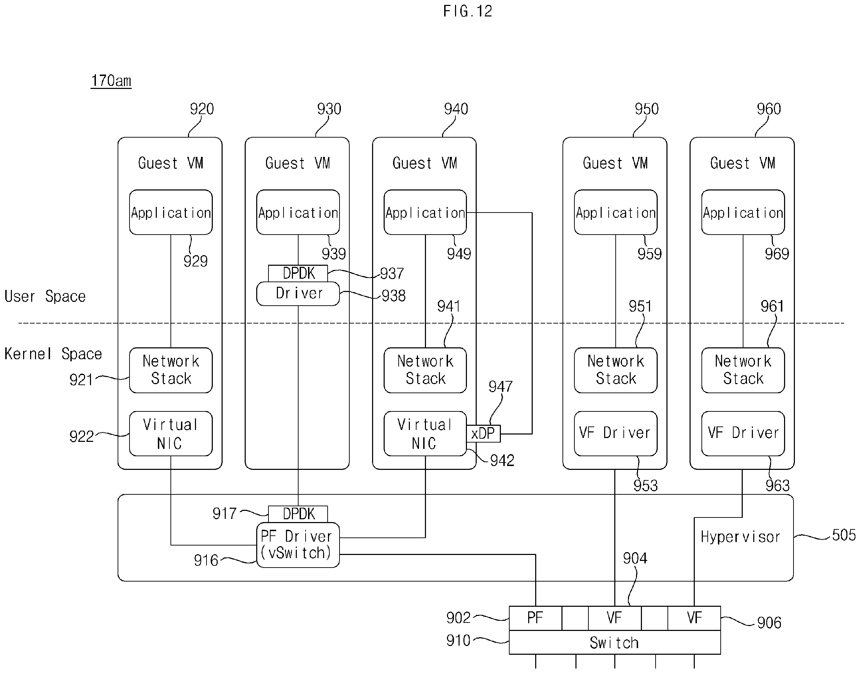

FIG. 12 is a diagram referred to in the description of operation of the signal processing device of FIG. 10.

Referring to the drawing, a signal processing device 170am of a vehicle according to an embodiment of the present disclosure includes the processor 175 configured to receive data by wire from the plurality of zonal signal processing devices 170Z1 to 170Z4 or the communication device 120, and to process the received data.

The processor 175 executes the hypervisor 505 and executes the plurality of virtual machines 920 to 960 on the hypervisor 505, and transmits the received data to at least one of the virtual machines 920 to 960 based on physical switching or virtual switching. Accordingly, the received data may be efficiently processed. Particularly, the received data may be processed efficiently, rapidly, and stably.

Meanwhile, the signal processing device 170am of a vehicle according to an embodiment of the present disclosure may further include a communication terminal 910 configured to receive data by wire from the plurality of zonal signal processing devices 170Z1 to 170Z4 or the communication device 120.

The communication terminal 910 may be an Ethernet switch 910 as illustrated herein.

Meanwhile, data having passed through the Ethernet switch 910 may be physically switched by a physical switch 920 or virtually switched by a virtual switch 906, to be transmitted to at least one of the virtual machines 920 to 960.

In the drawing, an example is illustrated in which the physical switch 920 and the virtual switch 906 are executed outside the hypervisor 505. However, unlike the example, physical switching by the physical switch 920 or virtual switching by the virtual switch 906 may be performed in the hypervisor 505.

For example, the processor 175 may transmit the received first data to an application 929 via a virtual network interface 922 and a network stack method 921 in the first virtual machine 920 through physical switching performed by the physical switch 902 and a physical driver 916 in the hypervisor 505.

In another example, the processor 175 may transmit the received first data to an application 939 via a driver 938 and a DPDK 937 in the second virtual machine 930 through physical switching performed by the physical switch 902 and a packet processing method (e.g., DPDK).

In yet another example, the processor 175 may transmit the received first data to an application 949 via a virtual network interface 922 and an xDP 947 in the third virtual machine 940 through physical switching performed by the physical switch 902 and the physical driver 916 in the hypervisor 505. In this case, the data may be transmitted to the application 949 via a network stack method 941.

Meanwhile, the processor 175 may transmit the received second data to an application 959 via a virtual driver 953 and a network stack method 951 in the fourth virtual machine 950 through virtual switching performed by the virtual switch 906.

Meanwhile, the processor 175 may transmit the received third data to an application 969 via a virtual driver 963 and a network stack method 961 in the fifth virtual machine 960 through virtual switching performed by the virtual switch 906 which is separately provided.

Meanwhile, based on at least one of safety, frequency, or size of the received data, the processor 175 may change a transmission scheme for transmitting the data to at least one virtual machine. Accordingly, the received data may be efficiently processed. Particularly, the received data may be processed efficiently, rapidly, and stably.

Meanwhile, in the case in which the received data is high-volume data with a size being greater than or equal to a first reference value and is required to be transmitted to the plurality of virtual machines 920 to 960, the processor 175 may transmit the data to the plurality of virtual machines 920 to 960 based on physical switching performed by the physical switch 902 and the shared memory 508 in the hypervisor 505. Accordingly, the received data may be efficiently processed.

Meanwhile, in the case in which the received data is low-volume data with a size less than or equal to a second reference value and is required to be transmitted to the plurality of virtual machines 920 to 960, the processor 175 may transmit the data to the plurality of virtual machines 920 to 960 based on physical switching performed by the physical switch 902, and the virtual switch 916 and the shared memory 508 in the hypervisor 505. Accordingly, the received data may be efficiently processed.

Meanwhile, in the case in which the received data is high-volume data with a size being greater than or equal to the first reference value, and physical switching is performed by the physical switch 902, the processor 175 may transmit the data to at least one virtual machine based on a driver in the hypervisor 505 by using a packet processing method (e.g., DPDK). Accordingly, the received data may be efficiently processed.

Meanwhile, in the case in which the received data is high-volume data with a size being greater than or equal to the first reference value, and virtual switching is performed, the processor 175 may transmit the data to at least one virtual machine by using a network stack method. Accordingly, the received data may be efficiently processed.

Meanwhile, in the case in which the received data is repeatedly received, and input data is low-volume data with a size being less than or equal to a second reference value, the processor 175 may transmit the data to at least one virtual machine based on a driver in the hypervisor 505 by using a high-speed data path method (e.g., xDP). Accordingly, the received data may be efficiently processed.

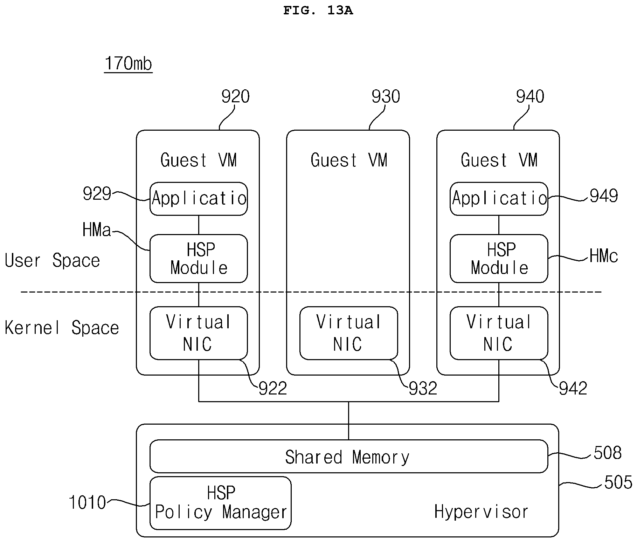

FIG. 13A is a diagram illustrating an example of transmitting the same data to a plurality of virtual machines.

Referring to the drawing, in the case in which the received data is high-volume data with a size being greater than or equal to the first reference value and is required to be transmitted to the plurality of virtual machines 920 to 960, the data processing manager 1010 in the processor 175 of a signal processing device 170mb may transmit the data to the plurality of virtual machines 920 to 960 based on physical switching performed by the physical switch 902 and the shared memory 508 in the hypervisor 505. Accordingly, the received data may be efficiently processed.

In the drawing, an example is illustrated in which the data is transmitted to the virtual network interfaces 922, 932, and 942 in the respective virtual machines 920 to 940 based on the shared memory 508 in the hypervisor 505.

Meanwhile, data received by the virtual network interface 922 in the first virtual machine 920 may be transmitted to the application 929 via the executed high-speed packet processing module HMa.

Meanwhile, data received by the virtual network interface 942 in the third virtual machine 940 may be transmitted to the application 949 via the high-speed packet processing module HMc.

In this method, high-volume data may be easily transmitted, and 1:N data transmission may be achieved.

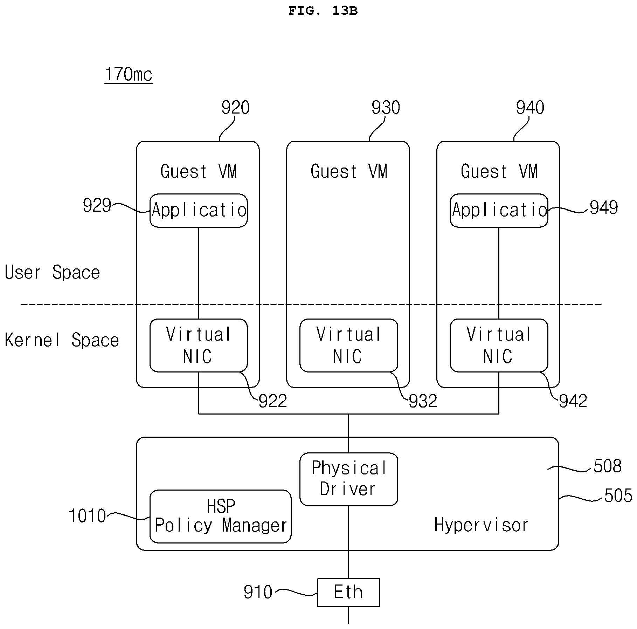

FIG. 13B is a diagram illustrating an example of transmitting data using a packet transmission method.

Referring to the drawing, the data processing manager 1010 in the processor 175 of a signal processing device 170mc may transmit data to the first virtual machine 920 or the third virtual machine 940 based on a physical driver in the hypervisor 505. Accordingly, the received data may be efficiently processed.

Meanwhile, data received by the virtual network interface 922 in the first virtual machine 920 may be transmitted to the application 929.

Meanwhile, data received by the virtual network interface 942 in the third virtual machine 940 may be transmitted to the application 949.

The method may facilitate transmission of data such as a control message, and the data transmission may be more effective as the number of data recipients decreases.

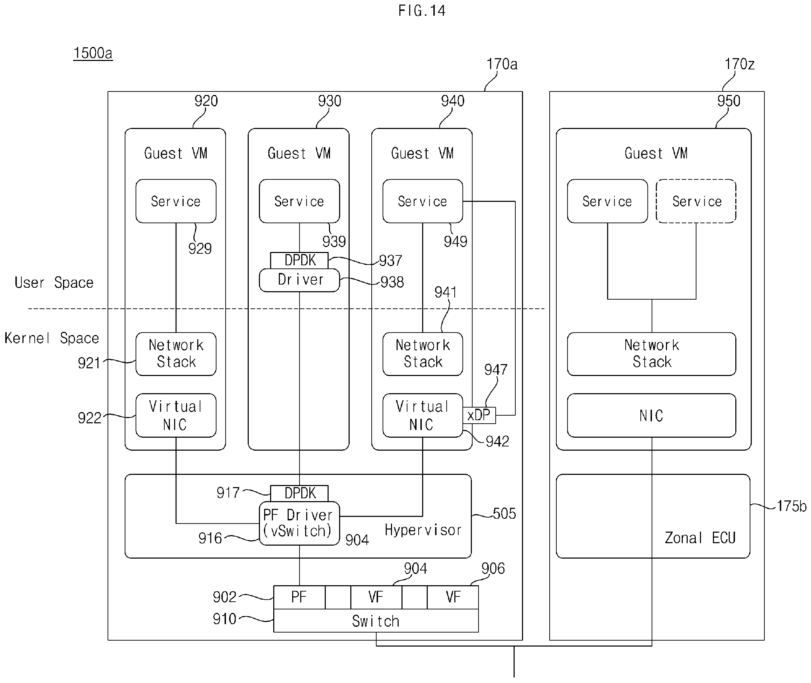

FIG. 14 is a diagram illustrating an example of data transmission between a signal processing device and a zonal signal processing device.

Referring to the drawing, in the case in which data is received from the processor 175b in the zonal signal processing device 170z, a signal processing device 1070 transmits the received data to at least one of virtual machines 920, 930, and 940 based on the Ethernet switch 910, physical switching performed by the physical switch 902, and virtual switching performed by the virtual switch 906.

In this case, based on at least one of safety, frequency, or size of the received data, the processor 175 in the signal processing device 1070 may use the shared memory 508, the virtual switch 916, the virtual driver 916, packet processing method (e.g., DPDK) 917, or high-speed data path (e.g., xDP) 947.

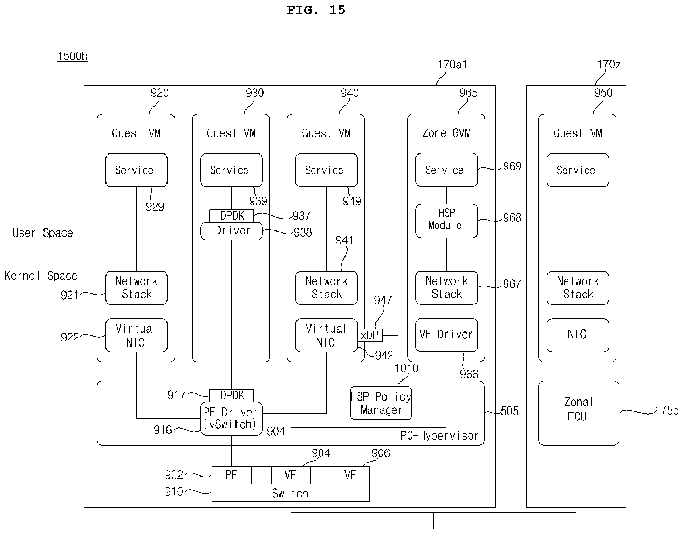

FIG. 15 is a diagram illustrating another example of data transmission between a signal processing device and a zonal signal processing device.

Referring to the drawing, a vehicle communication device 1500a according to an embodiment of the present disclosure includes the signal processing device 170a and the zonal signal processing device 170Z.

The signal processing device 170a of a vehicle may include the processor 175 configure to receive data by wire from the zonal signal processing device 170Z or the communication device 10, and to process the received data.

The processor 175 executes the hypervisor 505 and executes the plurality of virtual machines 920 to 940 on the hypervisor 505, and may transmit the received data to at least one of the virtual machines 920 to 940 based on physical switching performed by the physical switch 902 or virtual switching performed by virtual switches 904 and 906. Accordingly, the received data may be efficiently processed. Particularly, the received data may be processed efficiently, rapidly, and stably.

Meanwhile, the signal processing device 170a of a vehicle according to an embodiment of the present disclosure may further include the communication terminal 910 configured to receive data by wire from the zonal signal processing device 170Z or the communication device 120.

The communication terminal 910 may be an Ethernet switch 910 as illustrated herein.

Meanwhile, data having passed through the Ethernet switch 910 may be physically switched by the physical switch 920 or virtually switched by the virtual switch 906, to be transmitted to at least one of the virtual machines 920 to 960.

In the drawing, an example is illustrated in which the physical switch 920 and the virtual switches 904 and 906 are executed outside the hypervisor 505. However, unlike the example, physical switching by the physical switch 920 or virtual switching by the virtual switch 906 may be performed in the hypervisor 505.

For example, the processor 175 may transmit the received first data to the application 929 via the virtual network interface 922 and the network stack method 921 in the first virtual machine 920 through physical switching performed by the physical switch 902 and the physical driver 916 in the hypervisor 505.

In another example, the processor 175 may transmit the received first data to the application 939 via the driver 938 and the DPDK 937 in the second virtual machine 930 through physical switching performed by the physical switch 902 and packet processing method (e.g., DPDK 917).

In yet another example, the processor 175 may transmit the received first data to the application 949 via the virtual network interface 922 and the xDP 947 in the third virtual machine 940 through physical switching performed by the physical switch 902 and the physical driver 916 in the hypervisor 505. In this case, the data may be transmitted to the application 949 via the network stack method 941.

Meanwhile, the zonal signal processing device 170Z may include the processor 175b, and the processor 175b may execute the virtual machine 950.

The processor 175b in the zonal signal processing device 170Z may execute a network interface, network stack method, application, and the like in the virtual machine 950.

Meanwhile, in response to an additional service or application in the processor 175b of the zonal signal processing device 170Z, the processor 175 in the signal processing device 170a may execute the additional virtual machine on the hypervisor 505.

FIG. 15 is a diagram illustrating an example of executing an additional virtual machine 965 in the signal processing device 170a.

Referring to the drawing, a vehicle communication device 1500b according to an embodiment of the present disclosure includes the signal processing device 170a1 and the zonal signal processing device 170Z.

The signal processing device 170a1 may include the processor 175 configured to receive data by wire from the zonal signal processing device 170Z or the communication device 120, and to process the received data.

The processor 175 executes the hypervisor 505 and executes the plurality of virtual machines 920 to 940 on the hypervisor 505, and in response to an additional service or application in the processor 175b of the zonal signal processing device 170Z, the processor 175 may execute the additional virtual machine 965 on the hypervisor 505.

Meanwhile, the processor 175 in the signal processing device 170a1 receives data, received from the zonal signal processing device 170Z, and transmits the data to the additional virtual machine 965.

Specifically, the data processing manager 1010 executed in the hypervisor 505 of the processor 175 may control data, received from the zonal signal processing device 170Z, to be transmitted to the additional virtual machine 965 based on the Ethernet switch 910 and virtual switching performed by the virtual switch 904.

Particularly, the processor 175 in the signal processing device 170a1 may transmit data, received from the zonal signal processing device 170Z, to the application 969 via a virtual driver 969, a network stack method 967, and a high-speed packet processing module 968 in the additional virtual machine 965 based on the Ethernet switch 910 and the virtual switching performed by the virtual switch 904.

Accordingly, in the case where workload for the zonal signal processing device 170Z is required, the processor 175 in the signal processing device 170a1 may provide supplementary computing resources.

Meanwhile, as a high-speed packet processing method manager, the data processing manager 1010 executed in the hypervisor 505 of the processor 175 may manage the high-speed packet processing module 968.

Meanwhile, the processor 175 executes the hypervisor 505, and upon receiving data from the zonal signal processing device 170Z while executing the plurality of virtual machines 920 to 940 and 965 on the hypervisor 505, the processor 175 may control any one virtual machine, e.g., the fourth virtual machine 945, among the plurality of virtual machines 920 to 940 and 965, to be switched to a zonal virtual machine corresponding to the zonal signal processing device 170Z, and to operate as the zonal virtual machine. Accordingly, the virtual machine may be efficiently executed.

Meanwhile, the fourth virtual machine 945, which is switched to the zonal virtual machine, may execute the virtual driver 969, the network stack method 967, the high-speed packet processing module 968, and the application 969.

Further, the data received from the zonal signal processing device 170Z may be transmitted to the application 969 in the fourth virtual machine 945 that is switched to the zonal virtual machine.

For example, in the case in which an autonomous driving level changes such that pre-processing is required for the processor 175b in the zonal signal processing device 170Z, the processor 175 in the signal processing device 170a1 may receive data from the zonal signal processing device 170Z to provide supplementary computing resources.

Meanwhile, the processor 175 may execute another virtual machine, in addition to the additional virtual machine 965, by using virtual switching performed by the virtual switch 906.

That is, the processor 175 may control the number of virtual switches to increase as the number of additional virtual machines increases, thereby efficiently processing the received data.

Meanwhile, the processor 175 in the signal processing device 170a1 of a vehicle according to another embodiment of the present disclosure is configured to receive data by wire from the plurality of zonal signal processing devices 170Z1 to 170Z4 or the communication device 120 and process the received data, to execute the hypervisor 505 and execute the plurality of virtual machines 920 to 940 on the hypervisor 505, and change a transmission scheme for transmitting the data to at least one virtual machine based on at least one of safety, frequency, or size of the received data. Accordingly, the received data may be efficiently processed. Particularly, the received data may be processed efficiently, rapidly, and stably.

Meanwhile, in the case in which it is required to transmit the received data to the plurality of virtual machines 920 to 940, the processor 175 in the signal processing device 170a1 of a vehicle according to another embodiment of the present disclosure is configured to transmit the data to the plurality of virtual machines 920 to 940 based on physical switching performed by the physical switch 902 and the shared memory 508. Accordingly, the received data may be efficiently processed.

Meanwhile, in the case in which the received data is high-volume data with a size being greater than or equal to a first reference value and physical switching is performed by the physical switch 902, the processor 175 in the signal processing device 170a1 of a vehicle according to another embodiment of the present disclosure is configured to transmit the data to at least one virtual machine based on the driver in the hypervisor 505 using a packet processing method (e.g., DPDK), and in the case in which input data is high-volume data with a size greater than or equal to the first reference value and virtual switching is performed, the processor 175 is configured to transmit the data to at least one virtual machine by using a network stack method. Accordingly, the received data may be efficiently processed.

It will be apparent that, although the preferred embodiments have been shown and described above, the present disclosure is not limited to the above-described specific embodiments, and various modifications and variations can be made by those skilled in the art without departing from the gist of the appended claims. Thus, it is intended that the modifications and variations should not be understood independently of the technical spirit or prospect of the present disclosure.

## Claims

1. A signal processing device comprising a processor configured to receive data by wire from a plurality of zonal signal processing devices or a communication device and to process the received data,
wherein the processor is configured to execute a hypervisor and execute a plurality of virtual machines on the hypervisor, and transmit the data to at least one virtual machine based on physical switching or virtual switching.

2. The signal processing device of claim 1, wherein based on at least one of safety, frequency, or size of the received data, the processor is configured to change a transmission scheme for transmitting the data to the at least one virtual machine.

3. The signal processing device of claim 1, wherein in the case in which the received data has a size greater than or equal to a first reference value and is required to be transmitted to the plurality of virtual machines, the processor is configured to transmit the data to the plurality of virtual machines based on the physical switching and a shared memory in the hypervisor.

4. The signal processing device of claim 1, wherein in the case in which the received data has a size less than or equal to a second reference value and is required to be transmitted to the plurality of virtual machines, the processor is configured to transmit the data to the plurality of virtual machines based on the physical switching, and a virtual switch and the shared memory in the hypervisor.

5. The signal processing device of claim 1, wherein in the case in which a size of the received data is greater than or equal to the first reference value and the physical switching is performed, the processor is configured to transmit the data to the at least one virtual machine based on a driver in the hypervisor by using a packet processing method.

6. The signal processing device of claim 1, wherein in the case in which a size of the received data is greater than or equal to the first reference value and the virtual switching is performed, the processor is configured to transmit the data to the at least one virtual machine by using a network stack method.

7. The signal processing device of claim 1, wherein in the case in which the received data is repeatedly received and has a size less than or equal to a second reference value, the processor is configured to transmit the data to the at least one virtual machine based on the driver in the hypervisor using a high-speed data path method.

8. The signal processing device of claim 1, wherein the processor is configured to perform physical switching or virtual switching in the hypervisor.

9. The signal processing device of claim 1, wherein the processor is configured to execute a data processing manager in the hypervisor,
wherein based on at least one of safety, frequency, or size of the received data, the data processing manager is configured to change a transmission scheme for transmitting the data to the at least one virtual machine.

10. The signal processing device of claim 1, wherein a first virtual machine among the plurality of virtual machines corresponds to a system service virtual machine, a second virtual machine among the plurality of virtual machines corresponds to a virtual machine with a quality management level, a third virtual machine among the plurality of virtual machines corresponds to a virtual machine with a specific safety level, and a fourth virtual machine among the plurality of virtual machines corresponds to a virtual machine acting as a master node for orchestration.

11. The signal processing device of claim 10, wherein the first to third virtual machines correspond to worker node virtual machines.

12. The signal processing device of claim 10, wherein the processor is configured to execute a fifth virtual machine corresponding to a highest risk classification level, via a separate core different from the first to fourth virtual machines.

13. The signal processing device of claim 10, wherein the hypervisor is configured to execute a data processing manager, and the first to fourth virtual machines are configured to execute a high-speed packet processing module,
wherein in response to executing the data processing manager, data is transmitted to at least one high-speed packet processing module of the first to fourth virtual machines.

14. The signal processing device of claim 1, wherein in response to an additional service or application in a first zonal signal processing device among the plurality of zonal signal processing devices, the processor is configured to execute the additional virtual machine on the hypervisor, and transmit data, received from the first zonal signal processing device, to the additional virtual machine based on the virtual switching.

15. The signal processing device of claim 1, wherein the processor is configured to increase the number of virtual switches as the number of additional virtual machines increases.

16. A signal processing device comprising a processor configured to receive data by wire from a plurality of zonal signal processing devices or a communication device and to process the received data,
wherein the processor is configured to execute a hypervisor and execute a plurality of virtual machines on the hypervisor, and change a transmission scheme for transmitting the data to at least one virtual machine based on at least one of safety, frequency, or size of the received data.

17. The signal processing device of claim 16, wherein in response to need for transmission of the received data to the plurality of virtual machines, the processor is configured to transmit the data to the plurality of virtual machines based on the physical switching and a shared memory.

18. The signal processing device of claim 16, wherein:
in the case in which a size of the received data is greater than or equal to a first reference value and the physical switching is performed, the processor is configured to transmit the data to the at least one virtual machine based on a driver in the hypervisor by using a packet processing method; and
in the case in which a size of the received data is greater than or equal to the first reference value and virtual switching is performed, the processor is configured to transmit the data to the at least one virtual machine by using a network stack method.

19. The signal processing device of claim 16, wherein in the case in which the received data is repeatedly received, the processor is configured to transmit the data to the at least one virtual machine based on the driver in the hypervisor using a high-speed data path method.

20. A vehicle communication device comprising the signal processing device of any one of claims 1 to 19.
